# EUROPEAN PATENT APPLICATION

(11) **EP 4 366 289 A1**
(43) Date of publication of application: **08.05.2024**
(21) Application number: 22852016.9
(22) Date of filing: 28.07.2022

(54) **PHOTOGRAPHING METHOD AND RELATED APPARATUS**

(30) Priority: 31.07.2021 CN 202110876921
(71) Applicant: Huawei Technologies Co., Ltd., Longgang Shenzhen, Guangdong 518129 (CN)
(72) Inventor: ZENG, Junjie, Shenzhen, Guangdong 518129 (CN); WANG, Jun, Shenzhen, Guangdong 518129 (CN); QIAN, Kang, Shenzhen, Guangdong 518129 (CN); ZHU, Qingrui, Shenzhen, Guangdong 518129 (CN)
(74) Representative: MERH-IP Matias Erny Reichl Hoffmann Patentanwälte PartG mbB
(86) International application number: PCT/CN2022/108502
(87) International publication number: WO 2023/011302

(57) **Abstract**

This application discloses a photographing method and a related apparatus. In the proposed method, a terminal device starts, in response to a first instruction, a camera to capture an image based on a default aperture number, detects whether a first image captured by the camera includes a salient object and a target person, and determines a target focusing object and a target aperture number based on a depth of the salient object and a depth of the target person when detecting that the first image includes the salient object and the target person; and the camera focuses on the target focusing object, and captures an image based on the target aperture number. In this way, an aperture number can be adaptively adjusted based on the image captured by the camera, to greatly improve photographing experience of a user.

## Description

This application claims priority to Chinese Patent Application No. 202110876921.4, filed with the China National Intellectual Property Administration on July 31, 2021 and entitled "PHOTOGRAPHING METHOD AND RELATED APPARATUS", which is incorporated herein by reference in its entirety.

### TECHNICAL FIELD

This application relates to the field of electronic technologies, and in particular, to a photographing method and a related apparatus.

### BACKGROUND

As smartphones are popularized, people use mobile phones in more scenarios, and users have increasingly higher requirements on photographing effects of the mobile phones. Currently, limited by a size of a mobile phone, a camera of the mobile phone generally uses a fixed aperture for photographing. An aperture (aperture) is a component configured to control an opening size of a lens, to control a depth of field and lens imaging quality, and coordinately control an amount of light entering with a shutter. Limited by the fixed aperture, in many photographing scenarios (for example, a scenario in which a required depth of field is variable at any time), user experience in photographing and video recording is poor.

### SUMMARY

This application provides a photographing method and a related apparatus, so that an aperture number can be adaptively adjusted based on an image captured by a camera, to greatly improve photographing experience of a user.

According to a first aspect, this application provides a photographing method, applied to a terminal device. The terminal device includes a camera, and an adjustable aperture is configured for the camera. The method includes: The terminal device starts, in response to a first instruction, the camera to capture an image based on a default aperture number; detects whether a first image captured by the camera includes a salient object and a target person; and determines a target focusing object and a target aperture number based on a depth of the salient object and a depth of the target person when detecting that the first image includes the salient object and the target person; and the camera focuses on the target focusing object, and captures an image based on the target aperture number.

During implementation of this embodiment of this application, the adjustable aperture is configured for the terminal device. When the terminal device continuously captures an image by using the camera, the terminal device may adaptively switch a target focusing object and adjust an aperture number based on a depth of a target person and a depth of a salient object in an image recently captured by the camera, so that the camera can capture an image with an appropriate depth of field and appropriate brightness, and a focusing speed and focusing accuracy are improved. This greatly improves photographing experience of a user.

In an implementation, the determining a target focusing object and a target aperture number based on a depth of the salient object and a depth of the target person when detecting that the first image includes the salient object and the target person specifically includes: when detecting that the first image includes the salient object and the target person, the salient object and the target person are different objects, and the depth of the salient object and the depth of the target person meet a first preset condition, determining the salient object as the target focusing object, and determining the target aperture number based on the depth of the salient object; or when detecting that the first image includes the salient object and the target person, the salient object and the target person are different objects, and the depth of the salient object and the depth of the target person do not meet a first preset condition, determining the target person as the target focusing object, and determining the target aperture number.

During implementation of this embodiment of this application, the terminal device may adaptively switch the target focusing object based on the depth of the target person and the depth of the salient object, and then may adjust the target aperture number based on the target focusing object. When the salient object is the target focusing object, the target aperture number may be adaptively adjusted based on the depth of the salient object. In this way, when a photographed object changes or moves, the camera may also capture an image with an appropriate depth of field and appropriate brightness. This improves a focusing speed and focusing accuracy, to greatly improve photographing experience of a user.

In an implementation, the first preset condition includes: The depth of the salient object is less than the depth of the target person, and a depth difference between the depth of the salient object and the depth of the target person is greater than a difference threshold.

During implementation of this embodiment of this application, an actual use scenario is considered, and the camera is controlled to focus on the salient object only when the salient object is closer to the lens and a distance between the salient object and the target person is greater than the difference threshold.

In an implementation, the terminal device stores a first correspondence between a depth and an aperture number, and the determining the target aperture number based on the depth of the salient object includes: determining, based on the first correspondence, an aperture number corresponding to the depth of the salient object as the target aperture number. A smaller depth of the salient object indicates a smaller target aperture number.

During implementation of this embodiment of this application, when the first preset condition is met, the terminal device adjusts the aperture number based on the depth of the salient object. A smaller depth of the salient object indicates a smaller aperture number. In this way, when the salient object approaches the camera, the terminal device may reduce an aperture in time to increase a depth of field, to avoid blurring of the salient object and failure to focus quickly caused by moving the salient object out of a depth of field range.

In an implementation, the first correspondence includes a correspondence between N aperture numbers of the adjustable aperture and M consecutive depth intervals, one or more depth intervals of the M consecutive depth intervals correspond to one of the N aperture numbers, and N and M are positive integers greater than 1.

In an implementation, before the capturing an image based on the target aperture number, the method further includes: determining target exposure time and a target light sensitivity based on the target aperture number, where a degree of change from a first value to a second value is less than a first preset range, the first value is determined based on a current aperture number, current exposure time, and a current light sensitivity, and the second value is determined based on the target aperture number, the target exposure time, and the target light sensitivity. The capturing an image based on the target aperture number includes: capturing the image based on the target aperture number, the target exposure time, and the target light sensitivity.

During implementation of this embodiment of this application, when the aperture number is adjusted, the exposure time and the light sensitivity are adaptively adjusted, so that the degree of change from the first value to the second value remains within the first preset range before and after the aperture number is adjusted. For example, the first preset range is ±15%. This can ensure that image brightness of an image captured by the camera before and after the aperture number is switched changes smoothly.

In an implementation, before the detecting whether a first image captured by the camera includes a salient object and a target person, the method further includes: detecting whether current ambient light luminance is greater than a first luminance threshold. The detecting whether a first image captured by the camera includes a salient object and a target person includes: when detecting that the ambient light luminance is greater than the first luminance threshold, detecting whether the first image captured by the camera includes the salient object and the target person.

In an implementation, after the detecting whether current ambient light luminance is greater than a first luminance threshold, the method further includes: determining the target aperture number as the default aperture number when detecting that the ambient light luminance is less than the first luminance threshold.

During implementation of this embodiment of this application, in a high luminance environment, the terminal device adjusts the aperture number based on the detected target focusing object. In an environment without high luminance, a large default aperture number may be retained, or the aperture number may be further increased to ensure image brightness.

In an implementation, the determining a target focusing object and a target aperture number based on a depth of the salient object and a depth of the target person when detecting that the first image includes the salient object and the target person specifically includes: when detecting that the first image includes the salient object and the target person, and the salient object and the target person are a same object, determining the salient object as the target focusing object, and determining the target aperture number based on the depth of the salient object; or when detecting that the first image includes the salient object and the target person, and the salient object and the target person are a same person, determining the target person as the target focusing object and determining the target aperture number.

In an implementation, the photographing method further includes: when detecting that the first image includes the salient object but does not include the target person, determining the salient object as the target focusing object, and determining the target aperture number based on the depth of the salient object; or when detecting that the first image includes the target person but does not include the salient object, determining the target person as the target focusing object, and determining the target aperture number.

In an implementation, the determining the target aperture number specifically includes: determining the target aperture number as the default aperture number.

In an implementation, the determining the target aperture number specifically includes: determining the target aperture number based on current ambient light luminance.

In an implementation, the determining the target aperture number specifically includes: determining the target aperture number based on the depth of the target person.

In an implementation, when the ambient light luminance is greater than a second luminance threshold, the target aperture number is a first aperture number; or when the ambient light luminance is less than or equal to a third luminance threshold, the target aperture number is a second aperture number; and the default aperture number is less than the second aperture number and greater than the first aperture number.

According to a second aspect, this application provides a terminal device, including one or more processors and one or more memories. The one or more memories are coupled to the one or more processors, the one or more memories are configured to store computer program code, and the computer program code includes computer instructions. When the one or more processors execute the computer instructions, the terminal device is enabled to perform the photographing method in any one of the foregoing aspects and the possible implementations of the foregoing aspects.

According to a third aspect, an embodiment of this application provides a computer storage medium, including computer instructions. When the computer instructions are run on a terminal device, the terminal device is enabled to perform the method in any one of the foregoing aspects and the possible implementations of the foregoing aspects.

According to a fourth aspect, an embodiment of this application provides a computer program product. When the computer program product runs on a computer, the computer is enabled to perform the method in any one of the foregoing aspects and the possible implementations of the foregoing aspects.

### BRIEF DESCRIPTION OF DRAWINGS

FIG. 1 is a schematic diagram of a structure of a terminal device according to an embodiment of this application;
FIG. 2A is a schematic diagram of a webcast scenario according to an embodiment of this application;
FIG. 2B is a schematic diagram of a live broadcasting interface according to an embodiment of this application;
FIG. 3A and FIG. 3B are a method flowchart of a photographing method according to an embodiment of this application;
FIG. 4A is a schematic diagram of a salient object detection framework according to an embodiment of this application;
FIG. 4B is a schematic diagram of a salient object detection box according to an embodiment of this application;
FIG. 5A is a schematic diagram of a salient object detection framework according to an embodiment of this application;
FIG. 5B is a schematic diagram of a binary mask image according to an embodiment of this application;
FIG. 5C is a schematic diagram of a salient object division box according to an embodiment of this application;
FIG. 5D is a schematic diagram of depth prediction according to an embodiment of this application;
FIG. 6A is a schematic diagram of a target person detection box according to an embodiment of this application;
FIG. 6B is a schematic diagram of another binary mask image according to an embodiment of this application;
FIG. 6C is a schematic diagram of a preset scenario according to an embodiment of this application;
FIG. 7A to FIG. 7C are schematic diagrams of live broadcasting interfaces according to an embodiment of this application;
FIG. 8 is a method flowchart of another photographing method according to an embodiment of this application;
FIG. 9A to FIG. 9C are schematic diagrams of user interfaces on which a snapshot mode is started according to an embodiment of this application;
FIG. 10 is a method flowchart of another photographing method according to an embodiment of this application;
FIG. 11 is a diagram of a software system architecture according to an embodiment of this application; and
FIG. 12 is a diagram of another software system architecture according to an embodiment of this application.

### DESCRIPTION OF EMBODIMENTS

The following clearly describes technical solutions of this application in detail with reference to accompanying drawings. In descriptions of embodiments of this application, "/" means "or" unless otherwise specified. For example, A/B may indicate Aor B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.

The following terms "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

### Technical concepts in embodiments of this application are first described.

Aperture: The aperture is a component that is on a camera and that is configured to control an opening size of a lens, and is configured to control a depth of field and lens imaging quality, and coordinately control an amount of light entering with a shutter. Generally, an aperture f-number indicates a size of an aperture. The f-number is equal to a focal length of the lens/a diameter of an effective lens opening.

In some embodiments, an aperture number includes one or more of the following numbers: f/1.0, f/1.4, f/2.0, f/2.8, f/4.0, f/5.6, f/8.0, f/11, f/16, f/22, f/32, f/44, and f/64. When a shutter is unchanged, a smaller f-number indicates a larger lens opening, a larger aperture (aperture number), a more amount of light entering, a brighter picture, a narrower focal plane, and a more blurred subject background; and a larger f-number indicates a smaller lens opening, a smaller aperture (aperture number), a less amount of light entering, a darker picture, a wider focal plane, and a clear foreground and background of a subject.

Focal point: The focal point includes a point at which parallel light is focused on a photosensitive element (or a negative) through a lens. Focus length: The focus length is a distance of parallel light from a center of a lens of a camera to a focal point at which the light is focused.

Focus (Focus): The focus is adjusting an image distance by moving a lens group in a lens of a camera forward and backward, to enable a photographed object to just fall on a photosensitive element, so that imaging of the photographed object is clear. Auto focus (Auto Focus, AF for short) is a manner in which, by using a principle of object light reflection, light reflected by an object is received by a charge-coupled device (Charge-Coupled Device, CCD for short) on a camera, and an electric focusing apparatus is driven to focus on the object through computer processing. Imaging is according to the following law: 1/u + 1/v = 1/f, where u, v, and f respectively represent an object distance (a distance from the photographed object), an image distance, and a focal length. When the object distance and the focal length are determined, the image distance is appropriately adjusted to complete focusing, so that imaging of the photographed object can be clear.

Depth of field (Depth of Field, DOF): There is a permissible circle of confusion both in front of and behind a focal point. A distance between the two circles of confusion is called a depth of the focal point. A clear imaging range before and after a photographed object (that is, a focusing point) corresponding to the focal point is the depth of field. A foreground depth of field includes a clear range before the focusing point, and a background depth of field includes a clear range after the focusing point. Important factors that affect the depth of field include an aperture size, a focal length, and a photographing distance. A larger aperture (a smaller aperture value f) indicates a shallower depth of field, and a smaller aperture (a larger aperture value f) indicates a deeper depth of field. A longer focal length indicates a shallower depth of field, and a shorter focal length of a lens indicates a deeper depth of field. A larger photographing distance of a photographed object indicates a deeper depth of field, and a smaller photographing distance indicates a shallower depth of field.

**The following describes a structure of a terminal device 100 in embodiments of this application.**

The terminal device 100 may be a terminal device running iOS, Android, Microsoft, or another operating system. For example, the terminal device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the terminal device is not specially limited in embodiments of this application.

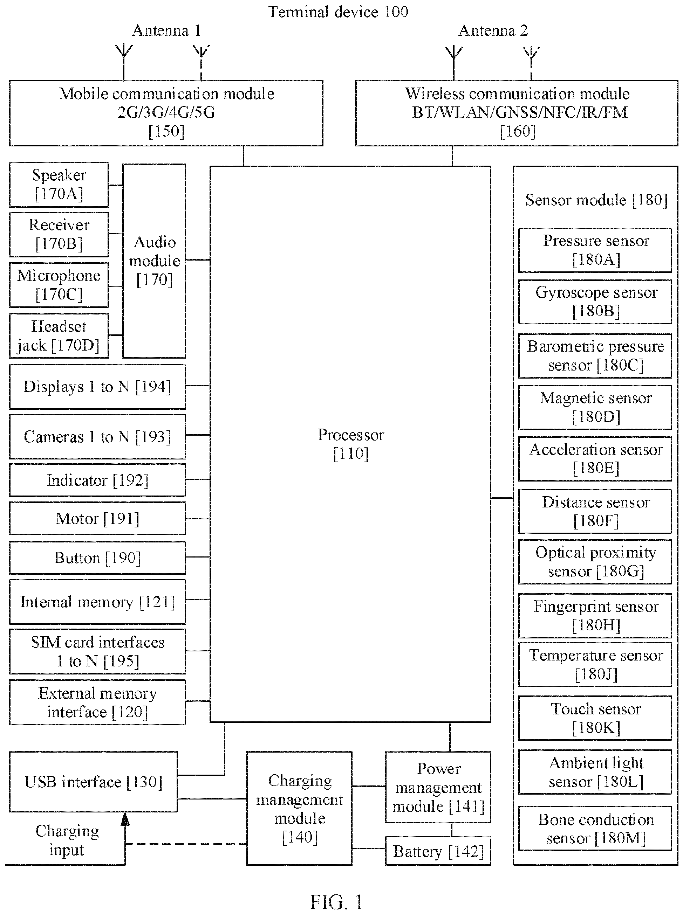

FIG. 1 is a schematic diagram of a structure of the terminal device 100. The terminal device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or combine some components, or split some components, or have different component arrangements. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate components, or may be integrated into one or more processors.

The controller may generate an operation control signal based on instruction operation code and a timing signal, and complete control of instruction fetching and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. In this way, repeated access is avoided, and waiting time of the processor 110 is reduced. This improves system efficiency.

In some embodiments, the processor 110 may include one or more interfaces. The interfaces may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charger may be a wireless charger or a wired charger. In some embodiments of wired charging, the charging management module 140 may receive a charging input from the wired charger through the USB interface 130. In some embodiments of wireless charging, the charging management module 140 may receive a wireless charging input through a wireless charging coil of the terminal device 100. The charging management module 140 may supply power to the terminal device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (electric leakage or impedance). In some other embodiments, the power management module 141 may also be disposed in the processor 110. In some other embodiments, the power management module 141 and the charging management module 140 may alternatively be disposed in a same device.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal device 100 may be configured to cover one or more communication frequency bands. Different antennas may further be multiplexed, to improve antenna usage. For example, the antenna 1 may be multiplexed as a diversity antenna of a wireless local area network. In some other embodiments, the antenna may be used in combination with a tuning switch.

The mobile communication module 150 may provide a solution that is applied to the terminal device 100 and that includes wireless communication like 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing like filtering or amplification on the received electromagnetic wave, and transmit the electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal by using an audio device (not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the terminal device 100 and that includes wireless communication like a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more devices that integrate at least one communication processing module. The wireless communication module 160 receives an electromagnetic wave through the antenna 2, demodulates an electromagnetic wave signal, performs filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments and in the terminal device 100, the antenna 1 is coupled to the mobile communication module 150, and the antenna 2 is coupled to the wireless communication module 160, so that the terminal device 100 can communicate with a network and another device through a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function by using the GPU, the display 194, the application processor, and the like. The GPU is a microprocessor for image processing, and is connected to the display 194 and the application processor. The GPU is configured to perform mathematical and geometric calculations for graphics rendering. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal device 100 may include one or N displays 194, where N is a positive integer greater than 1.

The terminal device 100 may implement a photographing function by using the ISP, the camera 193, the video codec, the GPU, the display 194, the application processor, and the like.

The ISP is configured to process data fed back by the camera 193. For example, during photographing, a shutter is opened, light is transferred to a camera photosensitive element through a lens, an optical signal is converted into an electrical signal, and the camera photosensitive element transfers the electrical signal to the ISP for processing, to convert the electrical signal into an image visible to a naked eye. The ISP may further perform algorithm optimization on noise of an image, brightness, and complexion. The ISP may further optimize parameters such as exposure and a color temperature of a photographing scene. In some embodiments, the ISP may be disposed in the camera 193.

The camera 193 is configured to capture a static image or a video. An object generates an optical image by using the lens and is projected to a photosensitive element. The photosensitive element may be a charge-coupled device (charge-coupled device, CCD) or a complementary metal-oxide-semiconductor (complementary metal-oxide-semiconductor, CMOS) optoelectronic transistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV In some embodiments, the terminal device 100 may include one or N cameras 193, where N is a positive integer greater than 1.

In this embodiment of this application, an adjustable aperture is configured for the camera 193. When capturing an image by using the camera, the terminal device 100 may automatically adjust a photographing parameter based on a preset policy, so that the camera 193 obtains an image with an appropriate depth of field and appropriate brightness, to improve a focusing speed. The photographing parameter includes an aperture number, and may further include parameters such as a light sensitivity (ISO), exposure time (or a shutter speed). In some embodiments, the aperture configured for the camera 193 has H adjustable aperture numbers, apertures corresponding to the H aperture numbers are successively in descending order, and H is a positive integer greater than 1. In some embodiments, by adjusting the aperture number, a lens opening may be adjusted to any value in a maximum lens opening value and a minimum lens opening value based on the premise of minimum adjustment precision.

The digital signal processor is configured to process a digital signal, and may further process another digital signal in addition to a digital image signal. For example, when the terminal device 100 selects a frequency, the digital signal processor is configured to perform Fourier transform on frequency energy and the like.

The video codec is configured to compress or decompress a digital video. The terminal device 100 may support one or more video codecs. In this way, the terminal device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transmission mode between human brain neurons, and may further continuously perform self-learning. The NPU can implement applications such as intelligent cognition of the terminal device 100. For example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double resource rate synchronous dynamic random access memory (double data rate synchronous dynamic random access memory, DDR SDRAM, for example, a fifth-generation DDR SDRAM is generally referred to as DDR5 SDRAM), and the like. The non-volatile memory may include a magnetic disk storage device and a flash memory (flash memory).

The flash memory may be classified into NOR FLASH, NAND FLASH, 3D NAND FLASH, and the like based on an operation principle, may be classified into a single-level cell (single-level cell, SLC) flash memory, a multi-level cell (multi-level cell, MLC) flash memory, a triple-level cell (triple-level cell, TLC) flash memory, a quad-level cell (quad-level cell, QLC) flash memory, and the like based on a storage cell potential order, and may be classified into a universal flash storage (English: universal flash storage, UFS), an embedded multimedia memory card (embedded multimedia card, eMMC), and the like based on storage specifications.

The random access memory may directly perform reading and writing through the processor 110, may be configured to store an operating system or an executable program (for example, a machine instruction) of another running program, or may be configured to store data of a user and an application, and the like.

The non-volatile memory may also store an executable program, store data of a user and an application, and the like, and the data may be loaded to the random access memory in advance, to directly perform reading and writing through the processor 110.

The external memory interface 120 may be configured to connect to an external non-volatile memory, to expand a storage capability of the terminal device 100. The external non-volatile memory communicates with the processor 110 through the external memory interface 120, to implement a data storage function. For example, files such as music and a video are stored in an external non-volatile memory.

The terminal device 100 may implement an audio function by using the audio module 170, the speaker 170A, the receiver 170B, the microphone 170C, the headset jack 170D, the application processor, and the like. For example, playing music, and recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "horn", is configured to convert an audio electrical signal into a sound signal. The terminal device 100 may listen to music or answer a hands-free call through the speaker 170A.

The receiver 170B, also referred to as an "earpiece", is configured to convert an audio electrical signal into a sound signal. When the terminal device 100 answers a call or receives voice information, the receiver 170B may be put close to a human ear to listen to a voice.

The microphone 170C, also referred to as a "mike" or a "voice tube", is configured to convert a sound signal into an electrical signal.

The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor.

The gyroscope sensor 180B may be configured to determine a motion posture of the terminal device 100. In some embodiments, an angular velocity of the terminal device 100 around three axes (namely, x, y, and z axes) may be determined by using the gyroscope sensor 180B. The gyroscope sensor 180B may be configured to perform image stabilization during photographing. For example, when a shutter is pressed, the gyroscope sensor 180B detects an angle at which the terminal device 100 jitters, calculates, based on the angle, a distance for which a lens module needs to compensate, and starts a lens to cancel the jitter of the terminal device 100 through reverse motion, to implement image stabilization. The gyroscope sensor 180B may be further used in a navigation scenario and a motion sensing game scenario.

The barometric pressure sensor 180C is configured to measure barometric pressure.

The acceleration sensor 180E may detect values of accelerations of the terminal device 100 in various directions (usually on three axes). A value and a direction of gravity may be detected when the terminal device 100 is still. The acceleration sensor 180E may be further configured to identify a posture of the terminal device, and is applied to applications such as landscape/portrait switching and a pedometer.

The distance sensor 180F is configured to measure a distance. The terminal device 100 may measure a distance by using infrared or laser. In some embodiments, in a photographing scene, the terminal device 100 may perform ranging by using the distance sensor 180F to implement fast focusing.

For example, the optical proximity sensor 180G may include a light emitting diode (LED) and an optical detector like a photodiode. The light emitting diode may be an infrared light emitting diode. The terminal device 100 emits infrared light by using the light emitting diode. The terminal device 100 detects infrared reflected light from a nearby object by using the photodiode. When sufficient reflected light is detected, it may be determined that there is an object near the terminal device 100. When insufficient reflected light is detected, the terminal device 100 may determine that there is no object near the terminal device 100. The terminal device 100 may detect, by using the optical proximity sensor 180G, that a user holds the terminal device 100 close to an ear for a call, to automatically turn off a screen for power saving. The optical proximity sensor 180G may also be used in a flip cover mode or a pocket mode to automatically unlock or lock a screen.

The ambient light sensor 180L is configured to sense ambient light luminance. The terminal device 100 may adaptively adjust brightness of the display 194 based on the sensed ambient light luminance. The ambient light sensor 180L may also be configured to automatically adjust white balance during photographing. The ambient light sensor 180L may also cooperate with the optical proximity sensor 180G to detect whether the terminal device 100 is in a pocket, to prevent an accidental touch.

The fingerprint sensor 180H is configured to collect a fingerprint.

The temperature sensor 180J is configured to detect a temperature. In some embodiments, the terminal device 100 executes a temperature processing policy by using a temperature detected by the temperature sensor 180J.

The touch sensor 180K is also referred to as a "touch device". The touch sensor 180K may be disposed on the display 194. The touch sensor 180K and the display 194 constitute a touchscreen, which is also referred to as a "touch screen". The touch sensor 180K is configured to detect a touch operation performed on or near the touch sensor 180K. The touch sensor may transfer a detected touch operation to the application processor, to determine a touch event type. A visual output related to the touch operation may be provided on the display 194. In some other embodiments, the touch sensor 180K may be also disposed on a surface of the terminal device 100 at a position different from a position of the display 194.

The bone conduction sensor 180M may obtain a vibration signal.

The button 190 includes a power button, a volume button, and the like. The button 190 may be a mechanical button, or may be a touch key.

The motor 191 may generate a vibration prompt.

The indicator 192 may be an indicator light that indicates a charging state, power change, a message, a notification, and the like.

The SIM card interface 195 is configured to connect to a SIM card.

An embodiment of this application provides a photographing method. The photographing method is applied to a scenario in which a camera continuously captures an image, for example, a webcast scenario, a video call scenario, a photographing preview scenario, or a video recording scenario. In the proposed method, an adjustable aperture is configured for the terminal device 100. When the terminal device 100 continuously captures an image by using a camera, the terminal device 100 may adaptively adjust an aperture size and other photographing parameters (such as ISO and exposure time) based on ambient light luminance, a depth of a target person in an image recently captured by the camera, and/or a depth of a salient object in an image recently captured by the camera, so that the camera captures an image with an appropriate depth of field and appropriate brightness, to improve a focusing speed and focusing accuracy.

The following describes in detail the photographing method provided in this embodiment of this application by using a webcast scenario as an example.

First, the webcast scenario is briefly introduced. With the rise of online audio and video platforms, a webcast is an entertainment form in which an instant video is publicly played on the Internet. A streamer can record and upload a video in real time through a live broadcast device like a mobile phone or a tablet, to recommend food and daily necessities to audiences. The audiences can also interact with the streamer in real time through messages. Currently, because an aperture of the live broadcast device cannot be adjusted, when positions of the streamer and an introduced object change, a focus of a camera of the live broadcast device cannot be switched between the streamer and the object in a timely and accurate manner. Consequently, the camera of the live broadcast device cannot adaptively capture an image with an appropriate depth of field and appropriate brightness. For example, an existing live broadcast device focuses on a face by default, and a streamer needs to block the face, so that the live broadcast device can switch a focus to an object, to capture a clear image of the object. For example, a streamer places an object at a core position of a picture (for example, a position in a center and in front of the picture), and an existing live broadcast device takes long time to focus on the object. For example, a streamer needs to manually operate a live broadcast device to accurately focus on an object, and user operations are complicated. However, the photographing method provided in this embodiment of this application is implemented in the webcast scenario, so that the foregoing problems can be avoided, and user experience can be effectively improved.

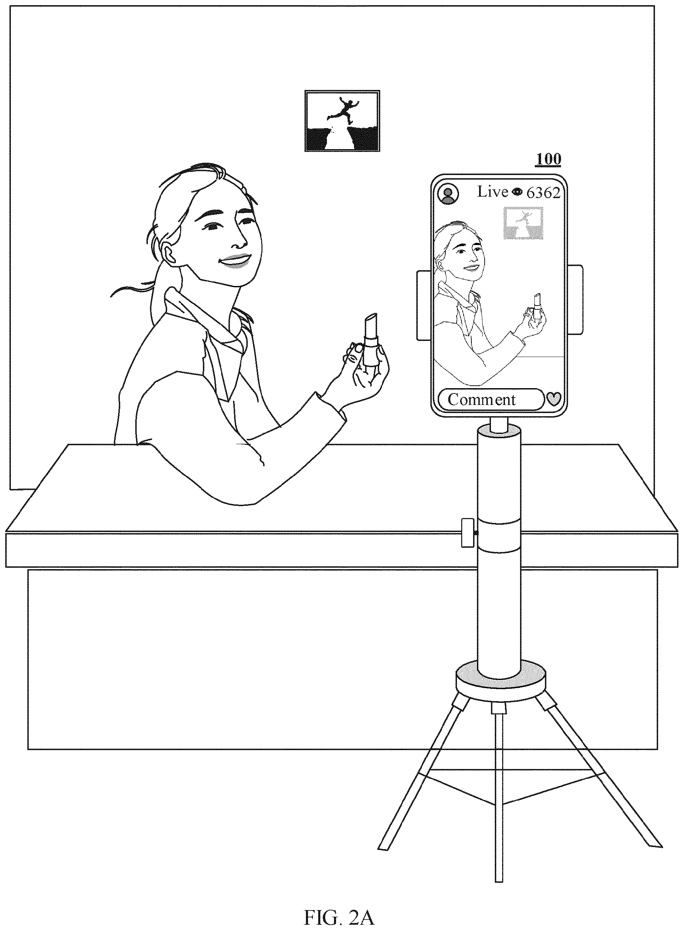

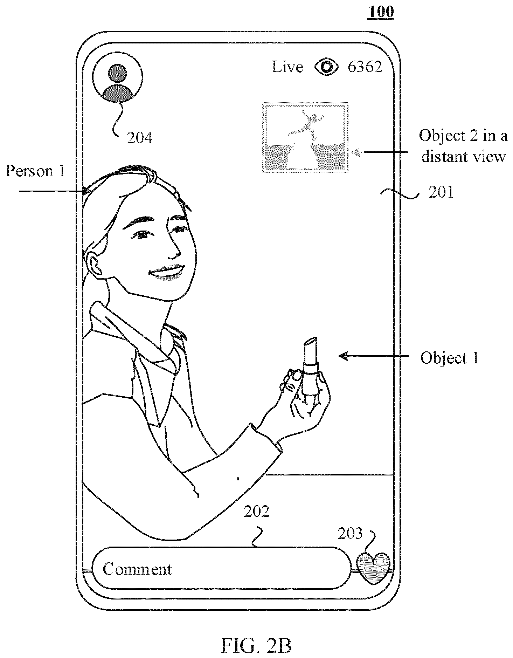

For example, FIG. 2A is a schematic diagram of a scenario in which a webcast is performed by the terminal device 100 according to an embodiment of this application. FIG. 2B shows a live broadcasting interface 11 of the terminal device 100.

As shown in FIG. 2B, the live broadcasting interface 11 includes a display region 201, a text box 202, a like control 203, a profile image 204, and viewers 205. The display region 201 is used to display an image captured in real time by a camera of the terminal device 100. For example, the image displayed in the display region 201 includes a person 1, an object 1, and an object 2 shown in the figure. Compared with the person 1 and the object 1, the object 2 is in a distant view. The text box 202 is used to receive a message entered by a user. The profile image 204 is used to display a profile image of a streamer. The viewers 205 are used to display a quantity of viewers in real time during live broadcasting. In this embodiment of this application, the terminal device 100 may capture a live video image by using a front-facing camera or a rear-facing camera. This is not specifically limited herein.

The live broadcasting interface 11 shown in FIG. 2B is an example user interface provided in this embodiment of this application. This application should not be limited. In some other embodiments, the live broadcasting interface 11 may include more or fewer interface elements than those shown in the figure.

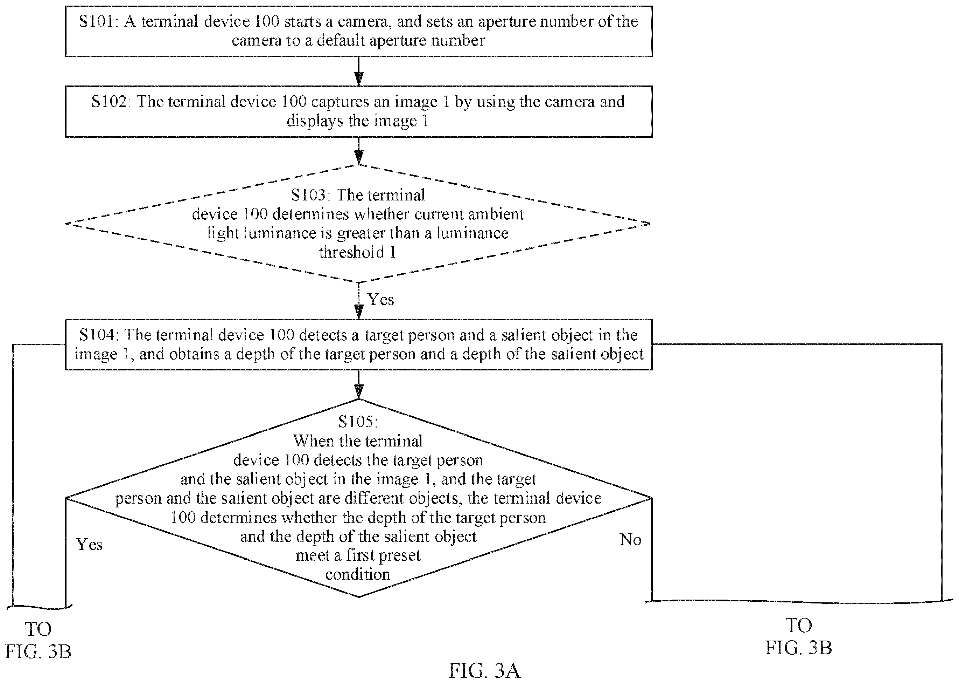

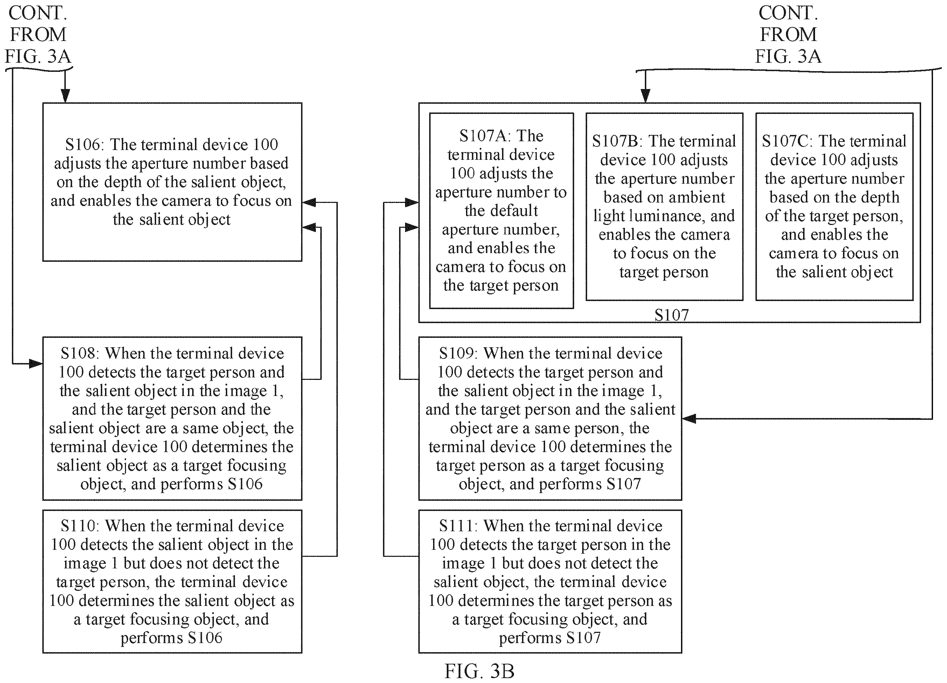

FIG. 3A and FIG. 3B are a method flowchart of a photographing method according to an embodiment of this application. The photographing method includes but is not limited to steps S101 to S106. The following describes a method process in detail.

S101: A terminal device 100 starts a camera, and sets an aperture number of the camera to a default aperture number.

S102: The terminal device 100 captures an image 1 by using the camera and displays the image 1.

In some embodiments, an aperture configured for the camera includes the foregoing H adjustable aperture numbers, and the default aperture number is an aperture number with a larger aperture in the foregoing H aperture numbers. For example, five aperture numbers configured for the camera are f/1.4, f/2, f/2.8, f/4, and f/6 in descending order. The default aperture number is f/2.

In some embodiments, the terminal device 100 receives a first instruction, and the terminal device 100 starts, in response to the first instruction, the camera to capture an image (for example, the image 1), and sets the aperture number of the camera to the default aperture number. The first instruction is used to trigger starting of a video photographing function of a specific application (for example, an instant messaging application, a camera application, or a live broadcast application). The first instruction may be an instruction generated based on an input operation performed by a user. The input operation may be a touch operation (for example, a tap operation or a touch and hold operation) input by the user on a display, or may be a non-contact operation like a motion sensing operation or an air gesture. The input operation may further be an operation in which a voice instruction of the user is recorded. This is not specifically limited in this embodiment of this application.

For example, in a live broadcasting scenario, the first instruction is used to start a live broadcast photographing function of a live broadcast application installed on the terminal device 100. In response to the foregoing input operation, the terminal device 100 starts the camera. The camera captures an image based on the default aperture number with a larger aperture, and displays the captured image, for example, the image 1, in the display region 201 of the photographing interface 11.

It should be noted that, as shown in FIG. 2B, because an aperture corresponding to the default aperture number is large, a depth of field corresponding to the image 1 displayed in the display region 201 after the camera is started is shallow. As a result, the object 2 in the distant view in the image 1 is blurred and cannot be seen clearly. The camera in this embodiment of this application may be a front-facing camera, or may be a rear-facing camera. This is not specifically limited herein. A first image in this application may be the image 1.

S103: The terminal device 100 determines whether current ambient light luminance is greater than a luminance threshold 1; and when the current ambient light luminance is greater than the luminance threshold 1, performs S104.

In some embodiments, when the current ambient light luminance is less than or equal to the luminance threshold 1, the terminal device 100 keeps an aperture number as the default aperture number.

In some embodiments, when the ambient light luminance is less than or equal to the luminance threshold 1 and greater than a luminance threshold 2, the terminal device 100 keeps an aperture number as the default aperture number. When the ambient light luminance is less than or equal to the luminance threshold 2, the terminal device 100 adjusts the aperture number to an aperture number 1. The luminance threshold 2 is less than the luminance threshold 1, and a lens opening corresponding to the aperture number 1 is greater than a lens opening corresponding to the default aperture number. For example, the default aperture number is f/2 and the aperture number 1 is f/1.4.

It may be understood that, when the ambient light luminance is greater than the luminance threshold 1, the terminal device 100 is in a high luminance environment, and the terminal device 100 performs step S104 and some steps in S105 to S111, to determine a target focusing object, and further determine, with reference to a depth of the target focusing object, how to adjust the aperture number. When the ambient light luminance is less than the luminance threshold 2, the terminal device 100 is in a night environment, and the terminal device 100 increases an amount of light entering by increasing the aperture number. When the ambient light luminance is less than or equal to the luminance threshold 1 and greater than the luminance threshold 2, the terminal device 100 is in an environment different from the high luminance environment and the night environment, and the terminal device 100 continues to keep the aperture number as the default aperture number.

In some embodiments, the terminal device 100 may detect current ambient light luminance by using an ambient optical sensor. In some embodiments, the terminal device 100 may obtain a correspondence between image brightness and ambient light luminance, and may further determine current ambient light luminance based on image brightness of the image 1. Obtaining of the ambient light luminance is not specifically limited in this embodiment of this application.

In this embodiment of this application, step S103 is optional. In some embodiments, after step S102, the terminal device 100 directly performs S104.

S104: The terminal device 100 detects a target person and a salient object in the image 1, and obtains a depth of the target person and a depth of the salient object.

In this embodiment of this application, the salient object in the image is an object that is in the image and on which a line of sight of a user is most likely to focus when the user views the image, namely, an object in the image that is most interested by the user.

The following describes how the terminal device 100 identifies the salient object in the image 1 and obtains the depth of the salient object. Specifically, step S104A and step S104B may be included.

S104A: The terminal device 100 detects the salient object in the image 1 captured by the camera, and determines a region 1 in which the salient object is located in the image 1.

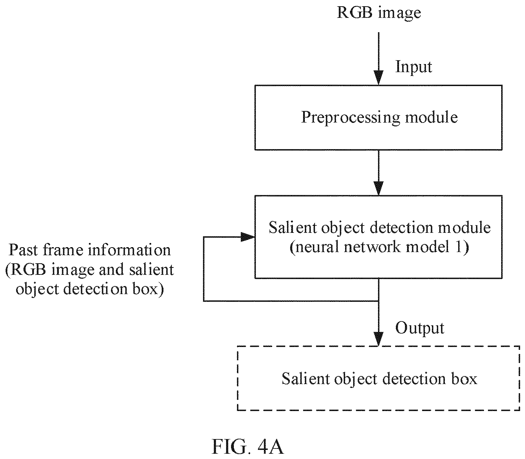

For example, FIG. 4A shows a salient object detection framework, and the framework includes a preprocessing module and a salient object detection module. The terminal device 100 inputs an RGB image (for example, the image 1) captured by the camera into the preprocessing module. The preprocessing module is used to perform downsampling and cropping on the RGB image. The terminal device 100 inputs a preprocessed RGB image output by the preprocessing module into the salient object detection module. The salient object detection module is used to identify a salient object in the input RGB image by using a neural network model 1, and output the salient object detection box that is in a preset shape and that corresponds to the salient object. The salient object detection box indicates a region 1 in which the salient object is located in the image 1. The preset shape may be a preset rectangle, oval, circle, or the like. This is not specifically limited herein.

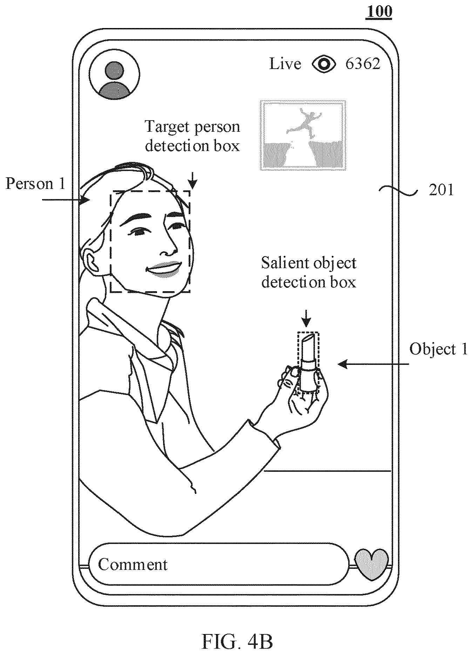

For example, as shown in FIG. 4B, the terminal device 100 detects the salient object in the image 1 by using the salient object detection framework shown in FIG. 4A, and outputs a rectangular salient object detection box corresponding to the salient object (namely, an object 1). The salient object detection box indicates a region in which the object 1 is located in FIG. 1.

In some embodiments, as shown in FIG. 4A, the terminal device 100 further inputs, as an input signal, past frame information (namely, an input image of a previous a frame and a corresponding output result, where a is a positive integer) of the salient object detection module, into the neural network model 1 again. Therefore, when salient object detection is performed on a current frame image captured by the camera, a detection box of a past frame image captured by the camera is also propagated, so that detection results of a plurality of consecutive frames of images are more stable.

It should be noted that, a thumbnail of the RGB image is generated by downsampling the RGB image, so that complexity of subsequent salient object detection can be reduced, and detection efficiency can be improved. The salient object is usually close to a central region of an image, and the RGB image is reduced by appropriately cropping the RGB image, so that subsequent detection efficiency of the salient object can be improved.

In the detection framework shown in FIG. 4A, the terminal device 100 may obtain the salient object detection box in the image 1 by using a trained neural network model 1 for salient object detection. The following briefly describes a training process of the neural network model 1.

First, labeled training data of the neural network model 1 is obtained, and a groundtruth graph is generated. The training data is a large quantity of video images in a common application scenario, and a label of each video image is a detection box of a projection object of a line of sight of a user in the video image. The training data and the groundtruth graph corresponding to the training data are input into a basic network model in a U-Net-like structure, and the foregoing basic network model is trained by using a supervised deep learning method, to obtain the trained neural network model 1 for salient object detection. In this way, by using the trained neural network model 1, the terminal device 100 can effectively and continuously track the salient object in the video image captured by the camera.

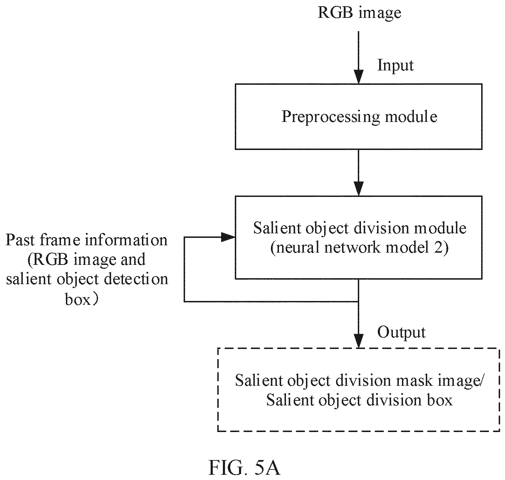

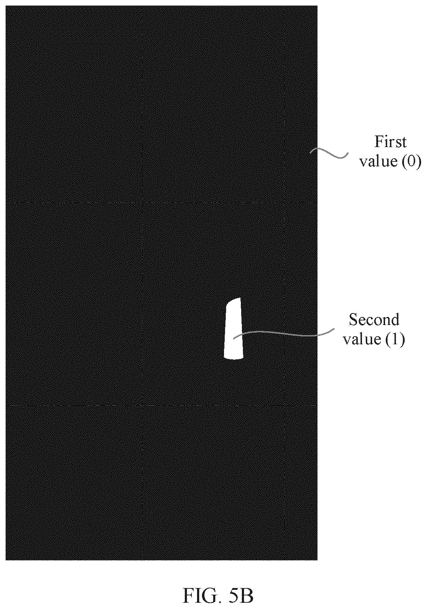

For example, FIG. 5A shows another salient object detection framework. The framework also includes a preprocessing module and a salient object detection module. Different from the salient object detection module shown in FIG. 4A, the salient object detection module shown in FIG. 5A performs salient object detection by using a trained neural network model 2. An input of the neural network model 2 is a preprocessed RGB image, and the neural network model 2 outputs a binary mask image corresponding to the preprocessed RGB image. A value corresponding to each pixel in the binary mask image is a first value (for example, 0) or a second value (for example, 1), and a region whose pixel value is the second value is a region in which a salient object is located. For example, FIG. 5B shows a binary mask image corresponding to FIG. 1. In FIG. 1, a region whose pixel value is the second value is a region in which the object 1 is located, and the object 1 is the salient object in FIG. 1.

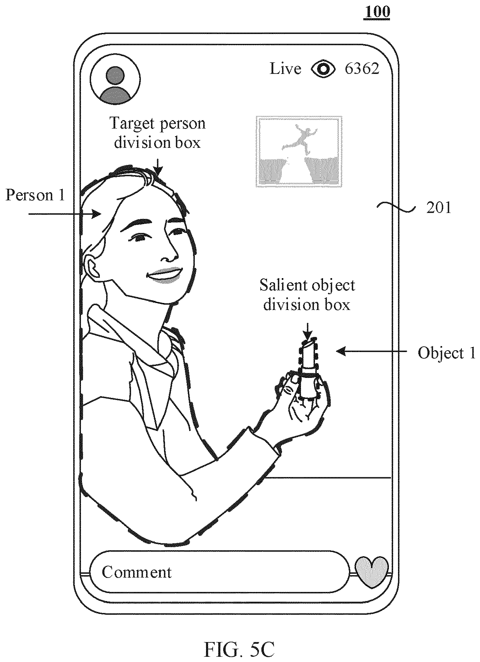

In some embodiments, the salient object detection module determines, based on the binary mask image output by the neural network model 2, an edge of a region in which a salient object is located, and uses a closed edge line of the salient object as a salient object division box. The salient object division box indicates a region 1 in which the salient object is located. A shape of the salient object division box is not fixed and is usually irregular. For example, FIG. 5C shows a salient object division box of the salient object (namely, the object 1) of FIG. 1.

In some embodiments, an output of the neural network model 2 is a salient object division box of the salient object of the input RGB image.

In some embodiments, in the salient object detection framework shown in FIG. 5A, the terminal device 100 inputs, as an input signal, past frame information (namely, an input image of a previous a frame and a corresponding output result) of the salient object detection module, into the neural network model 2 again, to improve stability of the detection result. For details, refer to the description in FIG. 4A. Details are not described herein again.

It may be understood that, by using the salient object detection framework shown in FIG. 5A, the region in which the salient object is located may be separated from another region of FIG. 1 along an edge of the salient object.

In this embodiment of this application, when the terminal device 100 indicates the region 1 by using the salient object detection box, the terminal device 100 may represent a location of the region 1 in the image 1 by using coordinates and a size of the salient object detection box. For example, when the salient object detection box is rectangular, coordinates of the salient object detection box are coordinates of an upper left corner (or coordinates of a lower left corner, coordinates of an upper right corner, coordinates of a lower right corner), a size of the salient object detection box is a width and length of the salient object detection box. When the salient object detection box is circular, coordinates of the salient object detection box are circle center coordinates of the salient object detection box, and a size of the salient object detection box is a radius of the salient object detection box. When the terminal device 100 indicates the region 1 by using the salient object division box, the terminal device 100 may represent a location of the region 1 in the image 1 by using coordinates of each pixel on the salient object division box.

It should be noted that, when the salient object detection frameworks shown in FIG. 4A and FIG. 5A do not detect the salient object in FIG. 1, the salient object detection frameworks output no result, or output a preset symbol. The preset symbol indicates that the salient object in FIG. 1 is not detected. In addition, the preprocessing modules shown in FIG. 4A and FIG. 5A are optional. The terminal device 100 may also directly use the salient object detection module to perform salient object detection on an input image (for example, the image 1) of the framework.

S104B: The terminal device 100 determines a depth of the salient object based on the region 1 of the image 1.

In some embodiments, the terminal device 100 stores a correspondence between a phase difference (Phase Difference, PD) and a depth (namely, an object distance). The terminal device 100 obtains a PD value corresponding to the region 1 of the image 1, and further determines that a depth corresponding to the PD value is the depth of the salient object.

Specifically, a pixel sensor of the camera of the terminal device 100 has a phase detection function, and can detect a phase difference between a left pixel and a right pixel of each pixel in the region 1, so that the PD value corresponding to the region 1 may be determined based on the phase difference of each pixel in the region 1. For example, the PD value corresponding to the region 1 is equal to an average value of phase differences of all pixels in the region 1.

In some embodiments, the terminal device 100 obtains a depth image corresponding to the image 1. The terminal device 100 obtains, based on the depth image, depths corresponding to the pixels in the region 1 of the image 1, and further determines the depth of the salient object based on the depths corresponding to the pixels in the region 1.

The depth of the salient object indicates a distance between the salient object and the lens in an actual environment. A depth corresponding to a pixel 1 of the salient object in the region 1 indicates a distance between a location corresponding to the pixel 1 on the salient object and the lens in the actual environment. A pixel value of each pixel in the depth image indicates a depth corresponding to the pixel. It may be understood that the depth corresponding to the pixel 1 in the image 1 is a pixel value of a pixel corresponding to the pixel 1 in the depth image. Optionally, a resolution of the depth image is equal to a resolution of the image 1, and pixels of the depth image are in a one-to-one correspondence with pixels of the image 1. Optionally, a resolution of the depth image is less than a resolution of the image 1, and one pixel of the depth image corresponds to a plurality of pixels of the image 1.

In an implementation, the terminal device 100 determines that the depth of the salient object is an average value or a weighted average value of depths corresponding to all pixels in the region 1. In an implementation, the terminal device 100 determines that the depth of the salient object is an average value or a weighted average value of depths corresponding to all pixels in a preset region of the region 1. The preset region may be a region of a preset size and a preset shape at a central location of the region 1. In an implementation, the terminal device 100 divides a depth into N consecutive depth intervals, and distributes each pixel to a corresponding depth interval based on a depth corresponding to the pixel in the region 1. The terminal device 100 determines a depth interval 1 in which pixels of the region 1 are most distributed. The terminal device 100 determines that the depth of the salient object is an intermediate value of the depth interval 1.

In this embodiment of this application, the depth of the salient object may also be referred to as a depth of the region 1.

The following describes how to obtain the depth image corresponding to the image 1.

In an implementation, when capturing an image (for example, the image 1) by using the camera, the terminal device 100 captures, by using the camera configured with a depth measurement device, a depth image corresponding to the image. The depth measurement device may be a time of flight (Time of flight, TOF) ranging device, for example, ITOF or DTOF. Alternatively, the depth measurement device may be another type of device. This is not specifically limited herein.

Specifically, when capturing the image 1 by using the camera, the terminal device 100 continuously sends an optical pulse to a photographed range by using the TOF device, and then receives, by using the TOF device, the optical pulse returned from a photographed object. Distances between all photographed objects in the photographed range and the lens are determined by detecting round-trip time of flight of the optical pulse, and then the depth image corresponding to the image 1 is obtained.

In this embodiment of this application, the camera for capturing the image 1 and the camera for capturing the depth image may be a same camera, or may be different cameras. This is not specifically limited herein.

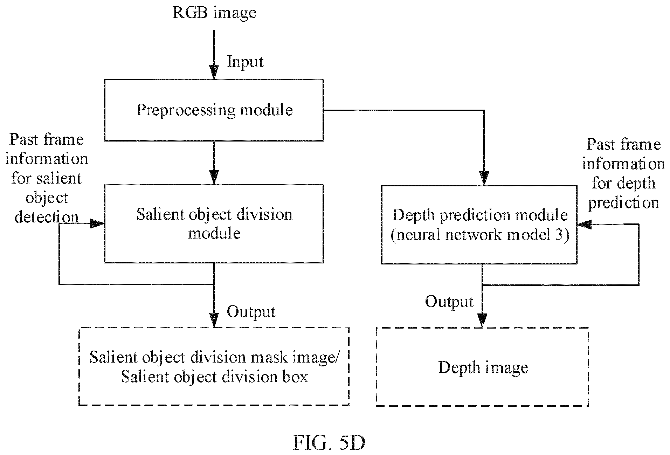

In another implementation, after capturing the image 1 by using the camera, the terminal device 100 inputs the image 1 into a trained neural network model 3 for depth prediction. The neural network model 3 outputs the depth image corresponding to the image 1. For example, as shown in FIG. 5D, the salient object detection framework shown in FIG. 5A (or FIG. 4A) may further include a depth prediction module, and the depth prediction module is used to obtain, by using the neural network model 3, a depth image corresponding to an input image.

This is not limited to the foregoing two implementations. In this embodiment of this application, the depth image corresponding to the image 1 may be obtained in another manner. This is not specifically limited herein.

The following describes how the terminal device 100 identifies the target person in the image 1 and obtains the depth of the target person. Specifically, step S104C and step S104D may be included.

S104C: The terminal device 100 detects the target person in the image 1 captured by the camera, and determines a region 2 in which the target person is located in the image 1.

In some embodiments, similar to the salient object detection shown in FIG. 4A and FIG. 5A, the terminal device 100 first preprocesses the image captured by the camera, and then detects the target person in the preprocessed image 1.

In some embodiments, the terminal device 100 identifies a face of the target person in the image 1 (for ease of description, the face of the target person is referred to as a target face for short) by using a face detection algorithm (for example, a trained neural network model 4 for face detection), and obtains a target person detection box that is in a preset shape (for example, a rectangle, an oval, or a circle) and that corresponds to the target face. The target person detection box indicates the region 2 in which the target person is located in the image 1. When the image 1 includes a plurality of faces, in the plurality of faces, an area of the target face is larger, a depth of the target face is smaller, and/or the target face is closer to a central location of the image 1.

In some embodiments, the image 1 includes a plurality of faces. The terminal device 100 identifies, by using a face detection algorithm, a region in which each face in the image 1 is located. Then, the terminal device 100 determines, based on an area of each face, a depth of each face, and/or a location of each face, a target face in the plurality of faces.

In this embodiment of this application, the terminal device 100 may determine a depth of each face based on a depth value corresponding to a pixel of a region in which each face is located in the depth image corresponding to the image 1. Specifically, refer to a manner of determining the depth of the salient object in the foregoing embodiment. Details are not described herein again.

Optionally, a face with a largest area in the plurality of faces is determined as a target face. Optionally, a face whose location is closest to a central location of the image 1 in the plurality of faces is determined as a target face. Optionally, weights of two factors area and depth are set, and a face whose weighted value of the two factors is largest in the plurality of faces is determined as a target face. For example, a weight of an area A of a face is a, and a weight of a depth B of a face is b. It is determined that a face with a largest value (a x A - b x B) is the target face.

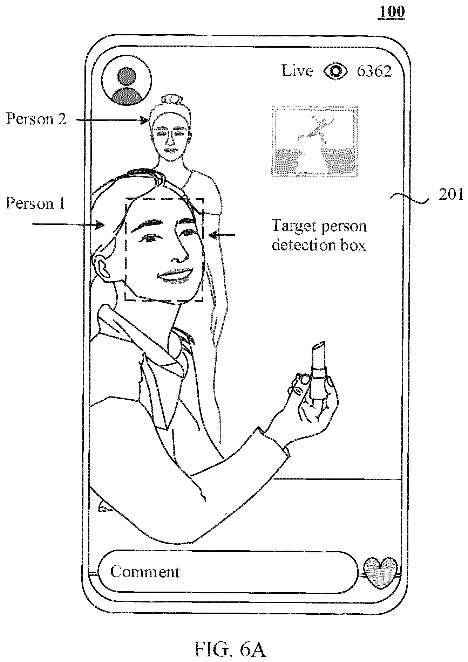

For example, as shown in FIG. 6A, an image 1 captured by a camera includes a person 1 and a person 2. The terminal device 100 identifies a face of the person 1 and a face of the person 2 in the image 1 by using a face recognition algorithm, and then determines, as a target face, the face of the person 1 whose weighted values of an area of a face and a depth of a face are larger based on areas and depths of the two faces.

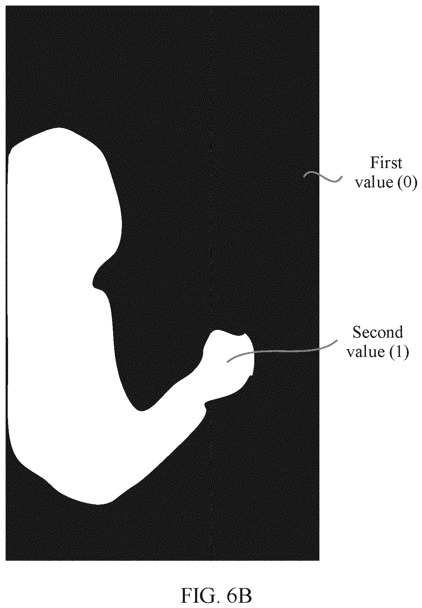

In some embodiments, the terminal device 100 detects the target person in the image 1 by using a person recognition algorithm (for example, a trained neural network model 5 for person detection), and obtains a binary mask image corresponding to the image 1. A value corresponding to each pixel in the binary mask image is a first value (for example, 0) or a second value (for example, 0), and a region whose pixel value is the second value is a region in which the target person is located. For example, FIG. 6B shows the binary mask image corresponding to FIG. 1. In FIG. 1, the region whose pixel value is the second value is a region in which the person 1 is located, and the person 1 is the target person in FIG. 1. When the image 1 includes a plurality of persons, in the plurality of persons, an area of the target person is larger, a depth of the target face is smaller, and/or the target person is closer to a central location of the image 1.

In some embodiments, the terminal device 100 determines, based on a binary mask image corresponding to the target person, an edge of a region in which the target person is located, and uses a closed edge line of the target person as a target person division box. The target person division box indicates a region 2 in which the target person is located. A shape of the target person division box is not fixed, usually irregular. For example, FIG. 5C shows a target person division box of the target person (namely, the person 1) in FIG. 1.

In some embodiments, an output of the neural network model 5 is a target person division box of the target person in the image 1.

In some embodiments, the image 1 includes a plurality of persons. The terminal device 100 recognizes the plurality of persons by using a person recognition algorithm, and then determines a target person in the plurality of persons based on an area, a depth, and/or a location of each person. Specifically, refer to the foregoing implementation of determining the target face from the plurality of faces. Details are not described herein again.

It should be noted that, in an implementation, as shown in FIG. 4B, the terminal device 100 uses the salient object detection box to indicate the region 1 in which the salient object is located, and uses the target person detection box to indicate the region 2 in which the target person is located. Both the target person detection box and the salient object detection box are detection boxes in preset shapes. In an implementation, as shown in FIG. 5C, the terminal device 100 uses the salient object division box to indicate the region 1 in which the salient object is located, and uses the target person division box to indicate the region 2 in which the target person is located.

In some scenarios (for example, a photographing preview scenario), when displaying an image captured by the camera, the terminal device 100 may display the identified target person detection box and the identified salient object detection box (or the target person division box and the salient object division box). In some scenarios (for example, a webcast scenario and a video call scenario), the terminal device 100 does not need to display the identified target person detection box and the identified salient object detection box (or the target person division box and the salient object division box). The salient object detection box is used as an example. The detection box is only used to determine a region in which the salient object is located in the image 1, so that the terminal device 100 determines a depth of the region in which the salient object is located.

S 104D: The terminal device 100 determines the depth of the target person based on the region 2 of the image 1.

Specifically, refer to the implementation of step S104B. Details are not described herein again.

In this embodiment of this application, the depth of the target person may also be referred to as a depth of the region 2.

In this embodiment of this application, similar to the salient object detection box, when the target person detection box is used by the terminal device 100 to indicate the region 2, the terminal device 100 may represent a location of the region 1 in the image 1 by using coordinates and a size of the target person detection box. When the target person division box is used by the terminal device 100 to indicate the region 2, the terminal device 100 may represent a location of the region 2 in the image 1 by using coordinates of each pixel on the target person division box.

It should be noted that an execution sequence of detecting the target person (step S104A) and detecting the salient object (step S104C) is not specifically limited in this embodiment of this application. Steps S104A and S104C may be simultaneously performed, or may be sequentially performed in a preset sequence.

S105: When the terminal device 100 detects the target person and the salient object in the image 1, and the target person and the salient object are different objects, the terminal device 100 determines whether the depth of the target person and the depth of the salient object meet a first preset condition.

In some embodiments, the first preset condition is that the depth of the target person is less than the depth of the salient object, and a depth difference between the depth of the target person and the depth of the salient object is greater than a difference threshold. In some embodiments, the first preset condition is that the depth of the target person is less than the depth of the salient object, a depth difference between the depth of the target person and the depth of the salient object is greater than a difference threshold, and the depth of the salient object is less than a preset depth. In this embodiment of this application, when the first preset condition is met, the terminal device 100 determines that the salient object enters a macro photographing scenario.

In this embodiment of this application, when the depth of the target person and the depth of the salient object meet the first preset condition, the terminal device 100 determines the salient object as a target focusing object, and performs S106. When the first preset condition is not met, the terminal device 100 determines the target person as the target focusing object, and performs S107.

S106: The terminal device 100 adjusts the aperture number based on the depth of the salient object, and enables the camera to focus on the salient object.

In some embodiments, the depth of the salient object is in a linear relationship with the aperture number, and a smaller depth of the salient object indicates a smaller aperture number corresponding to the depth of the salient object.

In some embodiments, the aperture number of the camera includes the foregoing H aperture numbers, and the default aperture number is an i^{th} number in the foregoing H aperture numbers. The terminal device 100 divides the depth into (H - i) consecutive depth intervals in descending order, and last (H - i) aperture numbers in the H aperture numbers are in a one-to-one correspondence with the (H - i) depth intervals. The terminal device 100 adjusts the aperture number based on the depth of the salient object. A smaller depth of the salient object indicates a smaller adjusted aperture number.

For example, the aperture number of the camera includes five numbers: f/1.4, f/2, f/2.8, f/4, and f/6. The default aperture number is f/2. When the depth of the salient object is greater than a depth threshold 1 (for example, 60 cm), the aperture number is kept as the default aperture number. When the depth of the salient object is less than or equal to the depth threshold 1 and greater than a depth threshold 2 (for example, 40 cm), the aperture number is reduced to f/2.8. When the depth of the salient object is less than or equal to the depth threshold 2 and greater than a depth threshold 3 (for example, 30 cm), the aperture number is reduced to f/4. When the depth of the salient object is less than or equal to the depth threshold 3, the aperture number is reduced to f/6. It may be understood that, more adjustable aperture numbers indicate finer depth interval division.

In some embodiments, when adjusting the aperture number, the terminal device 100 accordingly adjusts exposure time and ISO, so that before and after the aperture number is adjusted, a change degree of a value (exposure time x ISO/f-number of an aperture number) is kept within a first preset range, for example, the first preset range is ±15%. This can ensure that image brightness of an image captured by the camera before and after the aperture number is switched changes smoothly.

In some embodiments, based on a location of the region 1 in which the salient object is located, the terminal device enables the camera to focus on the salient object by using an AF algorithm. Optionally, the terminal device 100 stores a correspondence between a depth and a focusing location of a focusing motor. The terminal device 100 determines a target focusing location of the focusing motor based on a depth of a preset region in the region 1 in which the salient object is located, and then drives the focusing motor to the target focusing location, to enable the camera to focus on the salient object. A location of the preset region is determined based on the location of the region 1. Optionally, the preset region may be a region of a preset size and a preset shape at a central location of the region 1. Optionally, the preset region is all regions of the region 1, and the depth of the preset region in the region 1 is the depth of the salient object.

It may be understood that, because a closer photographing distance of a photographed object indicates a shallower depth of field, when the salient object approaches the camera, the depth of field becomes shallower, and the salient object is easily moved out of a shallower depth of field range. As a result, the salient object cannot be focused in time, and imaging of the salient object is blurred. In this embodiment of this application, when the first preset condition is met, the salient object enters a macro photographing scenario, and the terminal device 100 adjusts the aperture number based on the depth of the salient object. A smaller depth of the salient object indicates a smaller aperture number. In this way, when the salient object approaches the camera, the terminal device 100 may reduce the aperture in time to increase the depth of field, to avoid blurring of the salient object caused by moving the salient object out of the depth of field range, and further improve a speed of focusing on the salient object.

In this embodiment of this application, step S107 includes three possible implementations: S107A, S107B, and S107C.

S107A: The terminal device 100 adjusts the aperture number to the default aperture number, and enables the camera to focus on the target person.

S107B: The terminal device 100 adjusts the aperture number based on ambient light luminance, and enables the camera to focus on the target person.

In some embodiments, in step S107B, when the ambient light luminance is greater than a preset threshold 1, the aperture number is reduced based on the ambient light luminance, and exposure time and ISO are adaptively adjusted, so that before and after the aperture number is adjusted, a change degree of a value (exposure time x ISO/f-number of an aperture number) is kept within a first preset range. Optionally, when the ambient light luminance is greater than the preset threshold 1, the aperture number is reduced based on the ambient light luminance, the ISO remains unchanged, and the exposure time is appropriately increased.

For example, the aperture number of the camera includes five numbers: f/1.4, f/2, f/2.8, f/4, and f/6. The default aperture number is f/2. When the ambient light luminance is greater than the preset threshold 1, the aperture number is reduced to f/2.8.

S107C: The terminal device 100 adjusts the aperture number based on the depth of the target person, and enables the camera to focus on the salient object.

In some embodiments, the depth of the target person is in a linear relationship with the aperture number, and a smaller depth of the target person indicates a smaller adjusted aperture number. Specifically, refer to the correspondence between the depth of the salient object and the aperture number in step S106. Details are not described herein again.

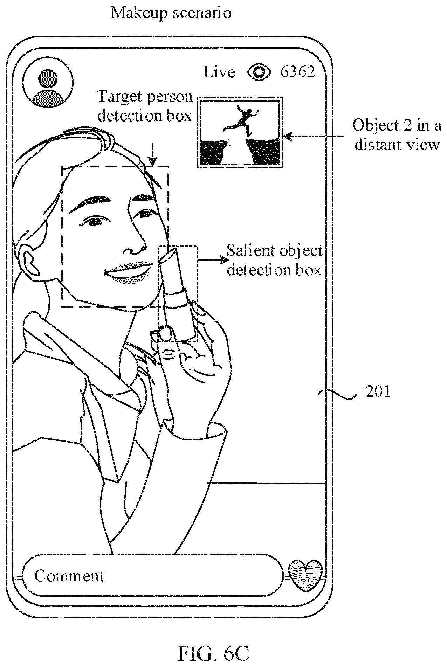

In some embodiments, when the terminal device 100 is in a preset scenario, the terminal device 100 performs S107C. In the preset scenario, a face is usually close to a lens. For example, the preset scenario is a makeup scenario. Optionally, the terminal device 100 may determine, by identifying an image captured by the camera, whether the terminal device 100 is currently in the preset scenario. For example, refer to FIG. 6C. When the terminal device 100 identifies that the image 1 includes a face and a cosmetic, and a depth of the face is less than a preset depth, it is determined that the terminal device 100 is currently in the makeup scenario. Optionally, a photographing mode of the terminal device 100 includes a preset scenario mode (for example, a makeup mode). When the terminal device 100 performs photographing in the preset scenario mode, it is determined that the terminal device 100 is currently in the preset scenario.

In some embodiments, based on a location of the region 2 in which the target person is located, the terminal device 100 enables the camera to focus on the target person by using an AF algorithm. Optionally, the terminal device 100 stores a correspondence between a depth and a focusing location of a focusing motor. The terminal device 100 determines a target focusing location of the focusing motor based on a depth of a preset region in the region 2 in which the target person is located, and then drives the focusing motor to the target focusing location, to enable the camera to focus on the target person. A location of the preset region is determined based on the location of the region 2. Optionally, the preset region may be a region of a preset size and a preset shape at a central location of the region 2. Optionally, the preset region is all regions of the region 2.

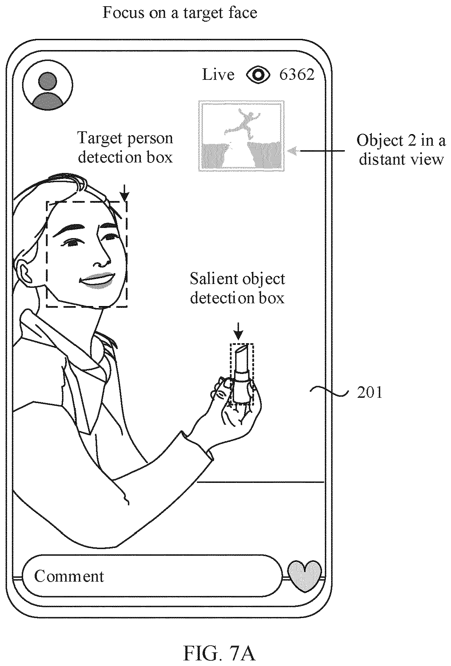

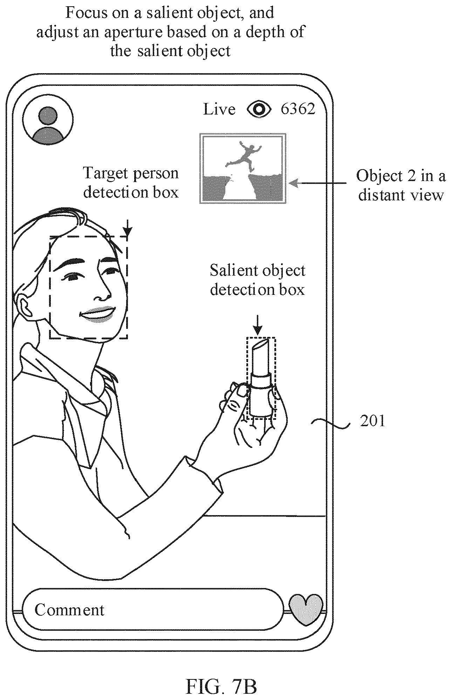

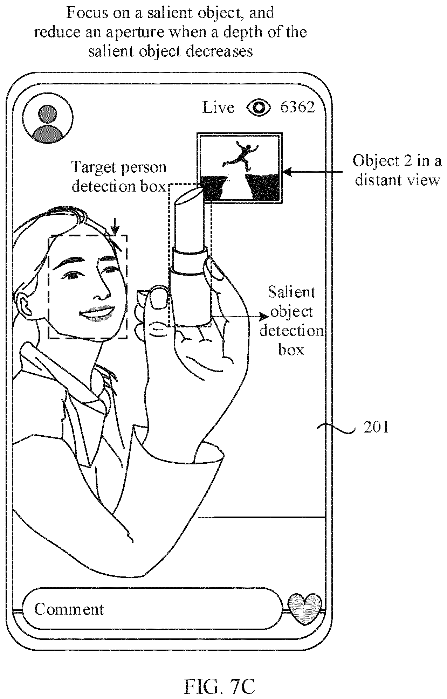

For example, as shown in FIG. 7A, FIG. 7B, and FIG. 7C, a person 1 holds an object 1, and gradually approaches the object 1 to the terminal device 100. The terminal device 100 detects a salient object (namely, the object 1) and a target person (namely, the person 1) in an image captured by the camera. For example, in an image shown in FIG. 7A, if the salient object and the target person do not meet a first preset condition, the terminal device 100 enables the camera to focus on the target person, and maintains a default aperture number. In this case, an object 2 in a distance view is blurred. In images shown in FIG. 7B and FIG. 7C, the salient object and the target person meet the first preset condition, and a depth of the salient object gradually decreases, and the terminal device 100 reduces an aperture number based on the depth of the salient object. As the aperture number decreases, depths of field of the images shown in FIG. 7B and FIG. 7C increases, and the object 2 in a distance view becomes clearer gradually.

In some embodiments, after step S104, S108 is further included.

S108: When the terminal device 100 detects the target person and the salient object in the image 1, and the target person and the salient object are a same object, the terminal device 100 determines the salient object as a target focusing object, and performs S106.

In some embodiments, when the terminal device 100 detects the target person and the salient object in the image 1, where the target person and the salient object are a same object, and a depth of the salient object is less than the depth threshold 1, the terminal device 100 determines the salient object as the target focusing object, and performs S106.

In some embodiments, after step S104, S109 is further included.

S109: When the terminal device 100 detects the target person and the salient object in the image 1, and the target person and the salient object are a same person, the terminal device 100 determines the target person as a target focusing object, and performs S107.

In some embodiments, after step S104, S110 is further included.

S110: When the terminal device 100 detects the salient object in the image 1 but does not detect the target person, the terminal device 100 determines the salient object as a target focusing object, and performs S106.

In some embodiments, after step S104, S111 is further included.

S111: When the terminal device 100 detects the target person in the image 1 but does not detect the salient object, the terminal device 100 determines the target person as a target focusing object, and performs S107.

According to the photographing method provided in this embodiment of this application, in a live broadcasting, photographing preview, video recording, or video call process, as the photographed object changes and moves, the terminal device 100 may adaptively adjust the target focusing object and the aperture number, so that the camera can capture an image with an appropriate depth of field and appropriate brightness at any time. In addition, inaccurate focusing and focusing that is not timely caused by movement of the photographed object in a short-distance range of the terminal device 100 are avoided, to effectively improve user experience.

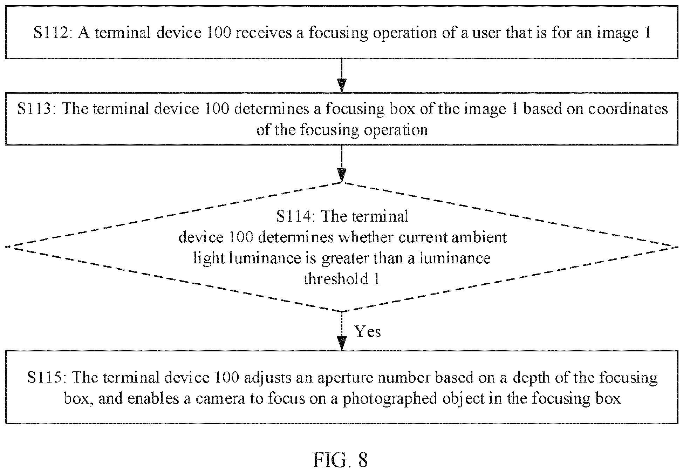

In some embodiments, refer to FIG. 8. After step S102, S112 to S113 are further included.

S112: The terminal device 100 receives a focusing operation of a user that is for the image 1.

S113: The terminal device 100 determines a focusing box of the image 1 based on coordinates of the focusing operation.

In some embodiments, based on coordinates 1 of the focusing operation in FIG. 1, the terminal device 100 determines the focusing box of a preset shape (for example, a square) and a preset size. The coordinates 1 are located in a central location of the focusing box.

S114: The terminal device 100 determines whether current ambient light luminance is greater than a luminance threshold 1; and when the current ambient light luminance is greater than the luminance threshold 1, performs S115.

In some embodiments, when the current ambient light luminance is less than or equal to the luminance threshold 1, the terminal device 100 keeps an aperture number as the default aperture number.

In some embodiments, when the ambient light luminance is less than or equal to the luminance threshold 1 and greater than a luminance threshold 2, the terminal device 100 keeps an aperture number as the default aperture number. When the ambient light luminance is less than or equal to the luminance threshold 2, the terminal device 100 adjusts the aperture number to an aperture number 1.

S115: The terminal device 100 adjusts an aperture number based on a depth of the focusing box, and enables the camera to focus on a photographed object in the focusing box.

In this embodiment of this application, the terminal device 100 may obtain, based on a depth image, a depth corresponding to a pixel in the focusing box. In an implementation, the terminal device 100 determines the depth of the focusing box as an average value or a weighted average value of depths corresponding to all pixels in the focusing box. In an implementation, the terminal device 100 determines that the depth of the focusing box is an average value or a weighted average value of depths corresponding to all pixels in a preset region of the focusing box. The preset region may be a region of a preset size and a preset shape at a central location of the focusing box. In an implementation, the depth is divided into N consecutive depth intervals, and each pixel is distributed to a corresponding depth interval based on a depth corresponding to the pixel in the focusing box. The terminal device 100 determines a depth interval 2 in which pixels in the focusing box are most distributed. The terminal device 100 determines that the depth of the focusing box is an intermediate value of the depth interval 2.

For how to adjust the aperture number based on the depth of the focusing box, refer to the foregoing related embodiment of adjusting the aperture number based on the depth of the salient object. Details are not described herein again.

This application further provides a photographing method. The method includes step S301 to step S304.

S301: A terminal device starts, in response to a first instruction, a camera to capture an image based on a default aperture number.

For the first instruction, refer to the description of the first instruction in the related embodiment of S101. Details are not described herein again.

S302: Detect whether a first image captured by the camera includes a salient object and a target person.

Specifically, for specific implementation of detecting whether the first image includes the salient object, refer to the related embodiment of S104A. For specific implementation of detecting whether the first image includes the target person, refer to the related embodiment of S104C. Details are not described herein again.

S303: Determine a target focusing object and a target aperture number based on a depth of the salient object and a depth of the target person when detecting that the first image includes the salient object and the target person.

The first image may be the image 1 in the foregoing embodiment.

S304: The camera focuses on the target focusing object, and captures an image based on the target aperture number.

In some embodiments, the determining a target focusing object and a target aperture number based on a depth of the salient object and a depth of the target person when detecting that the first image includes the salient object and the target person specifically includes: when detecting that the first image includes the salient object and the target person, the salient object and the target person are different objects, and the depth of the salient object and the depth of the target person meet a first preset condition, determining the salient object as the target focusing object, and determining the target aperture number based on the depth of the salient object; or when detecting that the first image includes the salient object and the target person, the salient object and the target person are different objects, and the depth of the salient object and the depth of the target person do not meet a first preset condition, determining the target person as the target focusing object, and determining the target aperture number.

In some embodiments, the first preset condition includes: The depth of the salient object is less than the depth of the target person, and a depth difference between the depth of the salient object and the depth of the target person is greater than a difference threshold.

In some embodiments, the terminal device stores a first correspondence between a depth and an aperture number, and the determining the target aperture number based on the depth of the salient object includes: determining, based on the first correspondence, an aperture number corresponding to the depth of the salient object as the target aperture number. A smaller depth of the salient object indicates a smaller target aperture number.

In some embodiments, the first correspondence includes a correspondence between N aperture numbers of an adjustable aperture and M consecutive depth intervals, one or more depth intervals of the M consecutive depth intervals correspond to one of the N aperture numbers, and N and M are positive integers greater than 1.

In addition, for the correspondence between a depth and an aperture number, refer to the description of the related embodiment of S106.

In some embodiments, before the capturing an image based on the target aperture number, the method further includes: determining target exposure time and a target light sensitivity based on the target aperture number, where a degree of change from a first value to a second value is less than a first preset range, the first value is determined based on a current aperture number, current exposure time, and a current light sensitivity, and the second value is determined based on the target aperture number, the target exposure time, and the target light sensitivity. The capturing an image based on the target aperture number includes: capturing the image based on the target aperture number, the target exposure time, and the target light sensitivity.

Optionally, the first value is equal to (current exposure time x current ISO/f-number of a current aperture number). The second value is equal to (target exposure time x target ISO/f-number of a target aperture number).

In some embodiments, the determining a target focusing object and a target aperture number based on a depth of the salient object and a depth of the target person when detecting that the first image includes the salient object and the target person specifically includes: when detecting that the first image includes the salient object and the target person, and the salient object and the target person are a same object, determining the salient object as the target focusing object and determining the target aperture number based on the depth of the salient object; or when detecting that the first image includes the salient object and the target person, and the salient object and the target person are a same person, determining the target person as the target focusing object, and determining the target aperture number.

In some embodiments, the photographing method further includes: when detecting that the first image includes the salient object but does not include the target person, determining the salient object as the target focusing object, and determining the target aperture number based on the depth of the salient object; or when detecting that the first image includes the target person but does not include the salient object, determining the target person as the target focusing object, and determining the target aperture number.

In some embodiments, the determining the target aperture number specifically includes: determining the target aperture number as the default aperture number.

In some embodiments, the determining the target aperture number specifically includes: determining the target aperture number based on current ambient light luminance. In some embodiments, when the ambient light luminance is greater than a second luminance threshold, the target aperture number is a first aperture number; or when the ambient light luminance is less than or equal to a third luminance threshold, the target aperture number is a second aperture number; and the default aperture number is less than the second aperture number and greater than the first aperture number. Specifically, refer to the description of the related embodiment of S107B. Details are not described herein again.

In some embodiments, the determining the target aperture number specifically includes: determining the target aperture number based on the depth of the target person. Specifically, refer to the description of the related embodiment of S107C. Details are not described herein again.

In some embodiments, before the detecting whether a first image captured by the camera includes a salient object and a target person, the method further includes: detecting whether current ambient light luminance is greater than a first luminance threshold. The detecting whether a first image captured by the camera includes a salient object and a target person includes: when detecting that the ambient light luminance is greater than the first luminance threshold, detecting whether the first image captured by the camera includes the salient object and the target person. In some embodiments, after the detecting whether current ambient light luminance is greater than a first luminance threshold, the method further includes: determining the target aperture number as the default aperture number when detecting that the ambient light luminance is less than the first luminance threshold.

The first luminance threshold may be the foregoing luminance threshold 1. Specifically, refer to the description of the related embodiment of S103.

An embodiment of this application further provides a photographing method. In the proposed method, after starting a snapshot mode, a terminal device 100 may automatically adjust an aperture number based on ambient light luminance and a moving speed of a target object in an image captured by a camera, so that the camera obtains an image with an appropriate depth of field and appropriate brightness, to improve a focusing speed and focusing accuracy.

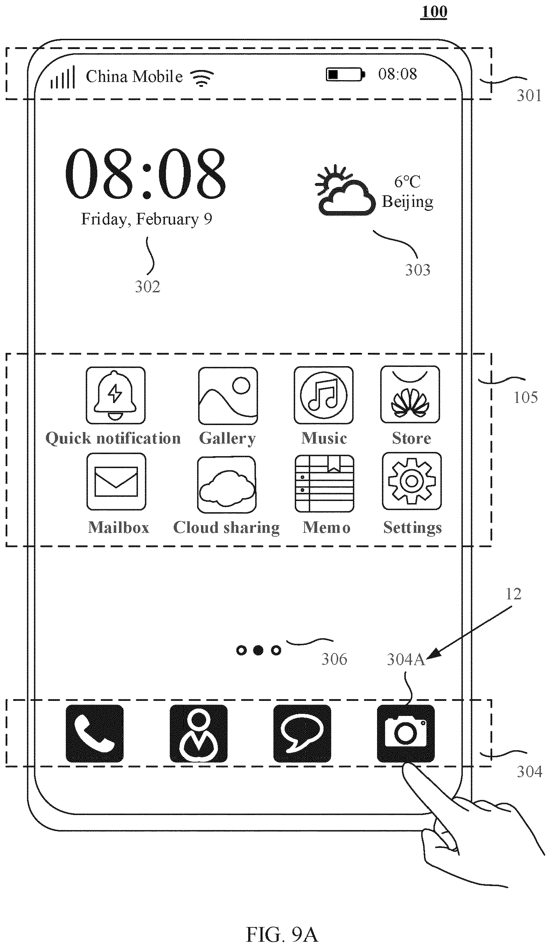

For example, FIG. 9A to FIG. 9C are schematic diagrams of user interfaces for starting the snapshot mode.

FIG. 9A shows a home screen 12 used to display applications installed on a terminal device 100.

The home screen 12 may include a status bar 301, a calendar indicator 302, a weather indicator 303, a taskbar 304 having a frequently used application icon, and another application icon 305. The taskbar 304 having a frequently used application icon may display: a phone icon, a contact icon, a messaging icon, and a camera icon 304A. The another application icon 305 may display more application icons. The home screen 12 may also include a page indicator 306. Other application icons may be distributed on a plurality of pages, and the page indicator 306 may indicate an application on which page a user is currently viewing. The user can slide left or right in regions of the other application icons to view the application icons on other pages.

It may be understood that FIG. 9A shows merely an example of the home screen on the terminal device 100, and should not constitute a limitation on this embodiment of this application.

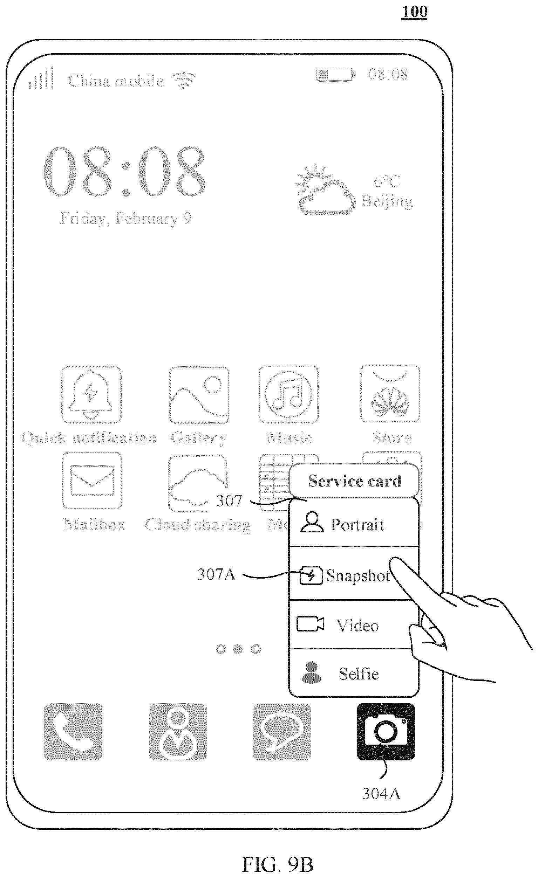

The camera icon 304A may receive an input operation (for example, a touch and hold operation) of the user. In response to the input operation, the terminal device 100 displays a service card 307 shown in FIG. 9B. The service card 307 includes one or more shortcut function controls of a camera application, for example, a portrait function control, a snapshot function control 307A, a video recording function control, and a selfie function control.

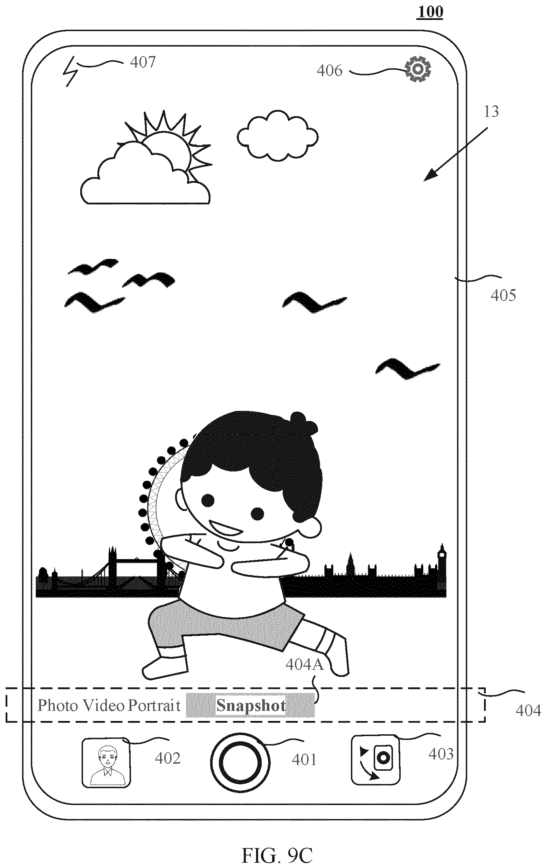

The snapshot function control 307A may receive the input operation (for example, a touch operation) of the user. In response to the input operation, the terminal device 100 displays a photographing interface 13 shown in FIG. 9C. The photographing interface 13 may include a photographing control 401, an album control 402, a camera switching control 403, a photographing mode 404, a display region 405, a setting icon 406, and a light supplement control 407.

The photographing control 401 may receive the input operation (for example, a touch operation) of the user. In response to the input operation, the terminal device 100 captures an image in the snapshot mode by using a camera, performs image processing on the image captured by the camera, and saves an image obtained after the image processing as a snapshot image.

The album control 402 is used to trigger the terminal device 100 to display a user interface of an album application. The camera switching control 403 is used to switch the camera for photographing.

The photographing mode 404 may include a night scene mode, a professional mode, a photo mode, a video recording mode, a portrait mode, a snapshot mode 404A, and the like. Any one of modes in the photographing mode 404 may receive a user operation (for example, a touch operation), and in response to the detected user operation, the terminal device 100 may display a photographing interface corresponding to a photographing mode.

As shown in FIG. 9C, a current photographing mode is the snapshot mode, and the display region 205 is used to display a preview image captured by the camera of the terminal device 100 in the snapshot mode. In this embodiment of this application, the user may alternatively start the snapshot mode of the camera application by tapping the snapshot mode 404A shown in FIG. 9C or through a voice instruction. This is not specifically limited herein.

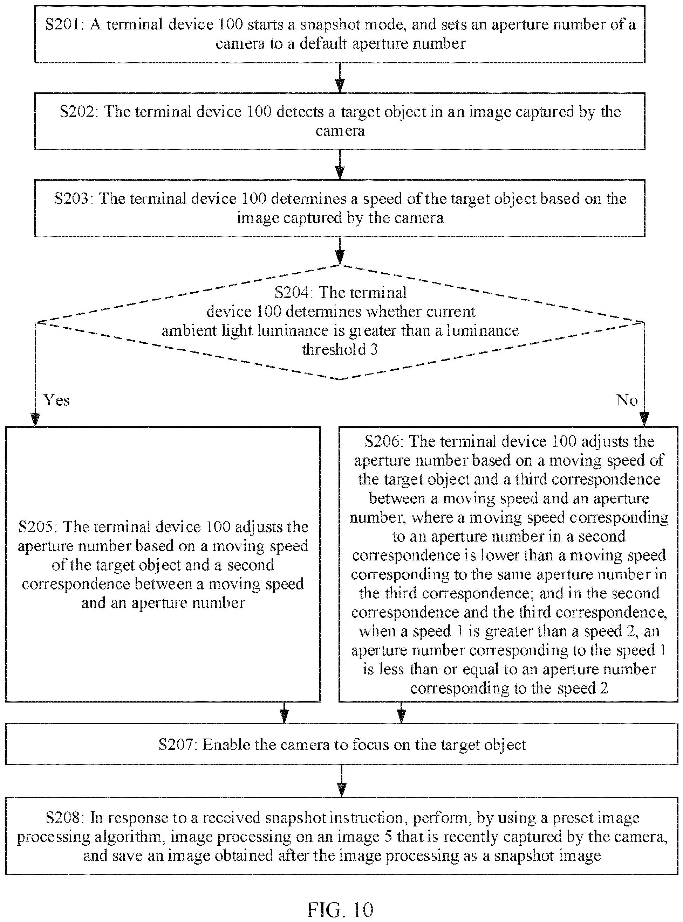

For example, FIG. 10 is a method flowchart of another photographing method according to an embodiment of this application. The photographing method includes but is not limited to steps S201 to S205. The following describes the photographing method in detail.

S201: A terminal device 100 starts a snapshot mode, and sets an aperture number of a camera to a default aperture number.

For example, the terminal device 100 starts the snapshot mode, and displays the photographing interface 13 shown in FIG. 9C. The preview image displayed in the display region 405 of the photographing interface 13 is captured by the camera based on the default aperture number.

It should be noted that the camera in this embodiment of this application may be a front-facing camera, or may be a rear-facing camera. This is not specifically limited herein.

S202: The terminal device 100 detects a target object in an image captured by the camera.

In some embodiments, before step S202, the method further includes: The terminal device 100 captures an image 2 by using the camera and displays the image 2. The terminal device 100 receives an input operation 1 of a user that is for the image 2, and in response to the input operation 1, the terminal device 100 determines, based on coordinates 2 of the input operation 1 performed on the image 2, a target object selected by the user in the image 2. A region in which the target object is located in the image 2 includes the coordinates 2. After the user selects the target object, in step S202, the terminal device 100 detects, by using a preset detection algorithm, a target object in each frame of the image captured by the camera.

In some embodiments, the target object is a salient object in an image captured by the camera. Specifically, for how the terminal device 100 detects the salient object in the image, refer to the related description of S104A. Details are not described herein again.

In addition, the terminal device 100 may determine the target object in another manner. This is not specifically limited herein. It may be understood that, in this embodiment of this application, the terminal device 100 may perform real-time detection and continuous tracking on the target object in the image captured by the camera.

S203: The terminal device 100 determines a moving speed of the target object based on the image captured by the camera.

In some embodiments, the terminal device 100 determines a moving speed of the target object based on two frames of images (namely, an image 3 and an image 4) that are recently captured by the camera and that include the target object.

In some embodiments, the terminal device 100 determines an optical flow intensity 1 of the target object between the image 3 and the image 4 by using a preset optical flow algorithm, and then determines a moving speed of the target object based on the optical flow intensity 1.

In some embodiments, the terminal device 100 stores a correspondence between a vector modulus value of an optical flow intensity and a moving speed, and the terminal device 100 determines, based on the correspondence, a moving speed corresponding to the optical flow intensity 1 as a moving speed of the target object. In some embodiments, the vector modulus value of the optical flow intensity 1 is equal to the moving speed of the target object.

It should be noted that an optical flow (optical flow) is an instantaneous speed at which a spatial moving object moves on an imaging plane (for example, an image captured by a camera). When a time interval is small, (for example, between two consecutive frames of images in a video), the optical flow is also equivalent to a displacement of a target point. It may be understood that the optical flow represents a change intensity of an image, and includes motion information of an object between adjacent frames. For example, coordinates of a feature point 1 of the target object in the image 3 are (x1, y1), and coordinates of the feature point 1 of the target object in the image 4 are (x2, y2). An optical flow intensity of the feature point 1 between the image 3 and the image 4 may be expressed as a two-dimensional vector (x2 - x1, y2 - y1). A larger optical flow intensity of the feature point 1 indicates a larger motion amplitude and a faster moving speed of the feature point 1. A smaller optical flow intensity of the feature point 1 indicates a smaller motion amplitude and a slower moving speed of the feature point 1.

In some embodiments, the terminal device 100 determines optical flow intensities of K feature points of the target object between the image 3 and the image 4, and further determines an optical flow intensity of the target object based on the optical flow intensities of the K feature points. Optionally, the optical flow intensity of the target object is an average value of two-dimensional vectors of the optical flow intensities of the K feature points.

This is not limited to determining the moving speed of the target object based on the optical flow intensity. In this embodiment of this application, the moving speed of the target object may be obtained in another manner. This is not specifically limited herein.

S204: The terminal device 100 determines whether current ambient light luminance is greater than a luminance threshold 3; and when the current ambient light luminance is greater than the luminance threshold 3, performs S205;or when the current ambient light luminance is less than or equal to the luminance threshold 3, performs S206.

S205: The terminal device 100 adjusts the aperture number based on the moving speed of the target object and a second correspondence between a moving speed and an aperture number.

S206: The terminal device 100 adjusts the aperture number based on the moving speed of the target object and a third correspondence between a moving speed and an aperture number, where a moving speed corresponding to an aperture number in a second correspondence is lower than a moving speed corresponding to the same aperture number in the third correspondence; and in the second correspondence and the third correspondence, when a speed 1 is greater than a speed 2, an aperture number corresponding to the speed 1 is less than or equal to an aperture number corresponding to the speed 2.

In some embodiments, the second correspondence (or the third correspondence) includes a correspondence between at least one speed interval and at least one aperture number. Optionally, the at least one moving speed interval is in a one-to-one correspondence with the at least one aperture number. Optionally, one or more speed intervals in the second correspondence (or the third correspondence) correspond to one aperture number.

For example, an aperture of the terminal device 100 includes five adjustable aperture numbers (for example, f/1.4, f/2, f/2.8, f/4, and f/6), and f/2 is the default aperture number. When the current ambient light luminance is greater than the luminance threshold 3 (for example, 500 illuminances (lux)), it is determined that the terminal device 100 is currently in a high luminance environment. The terminal device 100 determines, based on the second correspondence, an aperture number corresponding to the moving speed of the target object. The second correspondence includes three speed intervals: a low speed interval, a medium speed interval, and a high speed interval. For example, the low speed interval is [0, 1) m/s, the medium speed interval is [1, 2.5) m/s, and the high speed interval is [2.5, ∞) m/s. An aperture number corresponding to the low speed interval is f/2.8, an aperture number corresponding to the medium speed interval is f/4, and an aperture number corresponding to the high speed interval is f/6. When the current ambient light luminance is less than or equal to the luminance threshold 3, it is determined that the terminal device 100 is currently in an environment without high luminance. The terminal device 100 determines, based on the third correspondence, an aperture number corresponding to the moving speed of the target object. The third correspondence includes two speed intervals: a low speed interval and a medium speed interval. For example, the low speed interval is [0, 1) m/s, and the medium speed interval is [1, △) m/s. An aperture number corresponding to the low speed interval is f/1.4, and an aperture number corresponding to a medium-high speed interval is f/2.

It should be noted that, in this embodiment of this application, when there are more adjustable aperture numbers, a finer speed interval may be obtained through division, and a finer aperture number switching policy may be implemented based on the moving speed of the target object.

In some embodiments, when adjusting the aperture number, the terminal device 100 accordingly and automatically adjusts exposure time and ISO, so that before and after the aperture number is adjusted, a change degree of a value (exposure time x ISO/f-number of an aperture number) is kept within a first preset range, for example, the first preset range is ±15%. This can ensure that image brightness of an image captured by the camera before and after the aperture number is switched changes smoothly.

S207: Enable the camera to focus on the target object.

In some embodiments, based on a location of a region in which the target object is located, the terminal device f enables the camera to focus on the target object by using an AF algorithm. For a specific implementation, refer to a related embodiment in which the camera is enabled to focus on the salient object in step S106. Details are not described herein again.

S208: In response to a received snapshot instruction, perform, by using a preset image processing algorithm, image processing on an image 5 that is recently captured by the camera and that includes the target object, and save an image obtained after the image processing as a snapshot image.

In some embodiments, the image processing algorithm described above is used to remove motion blur of the image 5. Specifically, in an implementation, each frame of an image captured by the camera in a raw format is preprocessed to be converted into an image in a YUV format. Then, optical flow information of a moving photographed object in the image 5 is calculated based on a preprocessed image of a previous frame or preprocessed images of previous several frames of the image 5. The optical flow information and the image 5 are used as inputs of a neural network model of a deblur algorithm, and an output of the neural network model of the deblur algorithm is an image obtained after motion blur is removed from the image 5.

The motion blur (motion blur), also referred to as motion blur, is a moving effect of a photographed object in an image captured by a camera, and definitely occurs in a case in which the photographed object moves quickly or long-time exposure is performed. When the terminal device 100 shoots a video, if the terminal device 100 and/or the photographed object are/is moving rapidly and a video recording frame rate is insufficient, the motion blur occurs. A frame rate (frame rate) refers to a quantity of still images that can be captured by the terminal device 100 per second.

It should be noted that the image processing algorithm may be further used to perform other image processing on the image 5. This is not specifically limited herein. For example, saturation, a color temperature and/or contrast of the image 5 are adjusted, and portrait optimization is performed on a portrait in the image 5.

In this embodiment of this application, when a speed of the target object increases, the terminal device 100 may reduce the aperture number to increase a depth of field. This improves focusing accuracy and focusing speed of a fast-moving target object, to obtain clear imaging of the target object.

The following describes an example of a software system architecture of the terminal device 100 in embodiments of this application.

In this embodiment of this application, a software system of the terminal device 100 may be a layered architecture, an event-driven architecture, a microkernel architecture, a microservice architecture, or a cloud architecture. In this embodiment of this application, an Android system with a layered architecture is used as an example to describe a software structure of the terminal device 100.

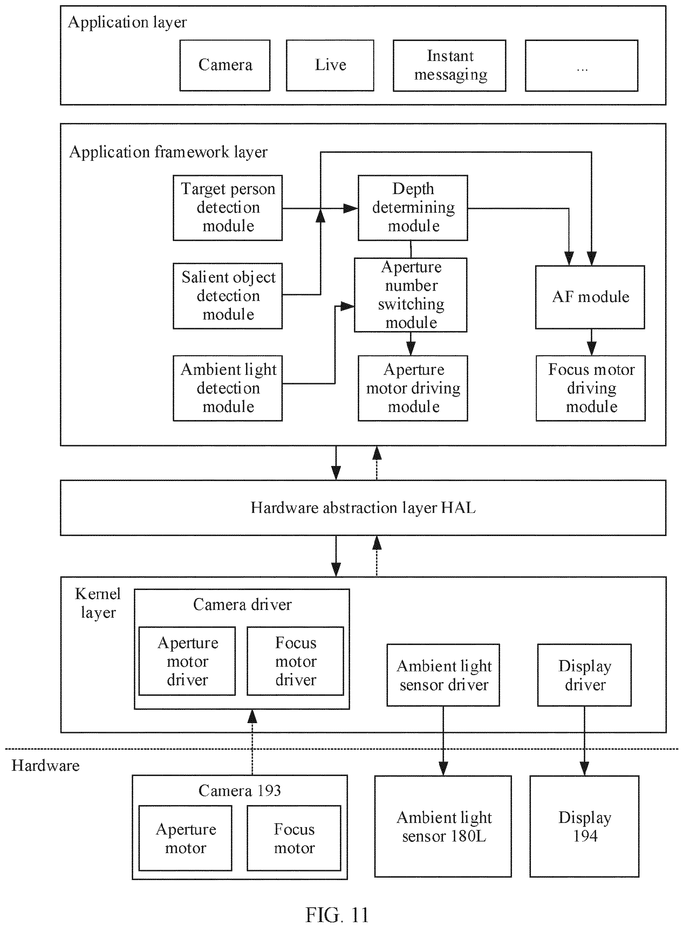

For example, FIG. 11 is a diagram of a software system architecture of the terminal device 100 according to an embodiment of this application. According to the diagram of the software system architecture shown in FIG. 11, when the terminal device 100 continuously captures an image by using a camera, the terminal device 100 may adaptively adjust an aperture number and other photographing parameters (such as ISO and exposure time) based on ambient light luminance, a depth of a target person in an image recently captured by the camera, and/or a depth of the salient object in the foregoing image, so that the camera captures an image with an appropriate depth of field and appropriate brightness, to improve a focusing speed and focusing accuracy.

As shown in FIG. 11, the layered architecture divides software into layers, each with a clear role and responsibility. Layers communicate with each other through software interfaces. In some embodiments, the Android system may be divided from top to bottom into an application layer, an application framework layer, a hardware abstraction layer (hardware abstraction layer, HAL) layer, and a kernel layer (kernel).

The application layer includes a series of application packages, such as a camera application, a live broadcast application, and an instant messaging application.

The application framework layer provides an application programming interface (application programming interface, API) and a programming framework for the application at the application layer. The application framework layer includes some predefined functions. As shown in FIG. 11, the application framework layer includes a target person detection module, a salient object detection module, an ambient light detection module, a depth determining module, an aperture number switching module, an aperture motor driving module, an AF module, and a focus motor driving module.

In this embodiment of this application, a motion detector (motion detector) may be further added to the application framework layer, and is used to perform logical determining on an obtained input event to identify a type of the input event. For example, the motion detector determines, based on information like touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures.

The HAL layer and the kernel layer are used to perform corresponding operations in response to a function invoked by a system service in the application framework layer. The kernel layer is a layer between hardware and software. The kernel layer may include a camera driver, a display driver, an ambient optical sensor driver, and the like. The camera driver may include a focus motor driver and an aperture motor driver.

In some embodiments, in response to a received first instruction, an application (for example, a camera application or a live broadcast application) invokes an interface of the application framework layer to start a photographing function, further invokes the camera driver at the kernel layer to drive the camera to continuously capture an image based on a default aperture number, and invokes the display driver to drive a display to display the image.

The salient object detection module is used to detect a salient object in an image captured by the camera, and determine a region 1 in which the salient object is located in the image. The salient object is a projection object of a line of sight of a user in the image. The target person detection module is used to detect a target person in an image captured by the camera, and determine a region 2 in which the target person is located in the image. The target person is a person that has a largest area, a smallest depth, and/or is closest to a central location of the image in the image. The ambient light detection module is used to detect current ambient light luminance. The depth determining module is used to determine the depth of the salient object based on the region 1 in which the salient object is located, and determine the depth of the target person based on the region 2 in which the target person is located.

The aperture number switching module is used to determine a currently required aperture number and a target focusing object based on ambient light luminance, the depth of the salient object, and the depth of the target person. The aperture motor driving module is used to determine an aperture motor code value corresponding to a currently required aperture number, and determine, based on the aperture motor code value, a current (or voltage) value of an aperture motor corresponding to the currently required aperture number. The AF module is used to determine a target focusing location by using an AF algorithm based on a depth of the target focusing object and a location of a region in which the target focusing object is located. The focus motor driving module is used to: determine a focus motor code value corresponding to the target focusing location, and determine, based on the focus motor code value, a current (or voltage) value of a focus motor corresponding to the target focusing location.

The aperture motor driver adjusts an aperture number based on a current (or voltage) value of the aperture motor delivered by the aperture motor driving module. The focus motor driver adjusts a focusing location based on a current (or voltage) value of the focus motor delivered by the focus motor driving module, so that the camera focuses on the target focusing object.

The terminal device captures an image by using the camera based on an adjusted aperture number and an adjusted focusing location, and invokes the display driver to drive the display to display the image.

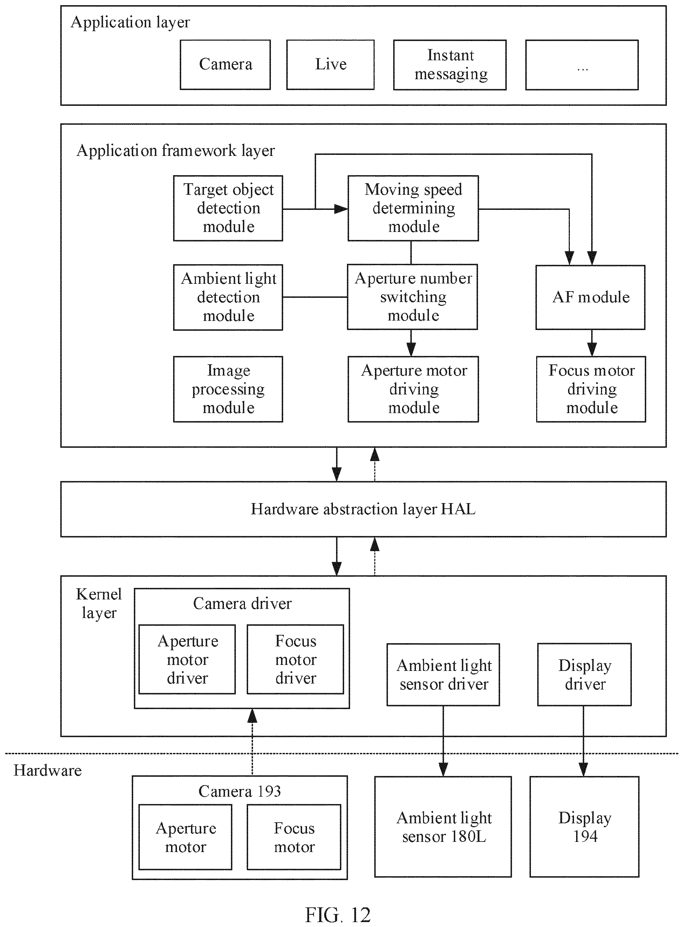

For example, FIG. 12 is a diagram of another software system architecture of the terminal device 100 according to an embodiment of this application. According to the diagram of the software system architecture shown in FIG. 11, after the camera application starts the snapshot mode, the terminal device 100 may automatically adjust the aperture number based on the ambient light luminance and the moving speed of the target object in the image captured by the camera, so that the camera obtains an image with an appropriate depth of field and appropriate brightness, to improve a focusing speed and focusing accuracy.

As shown in FIG. 12, an application framework layer includes a target object detection module, an ambient light detection module, a moving speed determining module, an aperture number switching module, an aperture motor driving module, an AF module, a focus motor driving module, and an image processing module.

In some embodiments, in response to a received instruction used to start a snapshot mode, a camera application invokes an interface of the application framework layer to start a photographing function in the snapshot mode, further invokes a camera driver at a kernel layer to drive a camera to continuously capture an image based on a default aperture number, and invokes a display driver to drive a display to display the image.

The target object detection module is used to detect a target object in an image captured by the camera. The moving speed determining module is used to determine a moving speed of the target object based on the image captured by the camera. The ambient light detection module is used to detect current ambient light luminance.

The aperture number switching module is used to determine a currently required aperture number based on ambient light luminance and the moving speed of the target object. The aperture motor driving module is used to determine an aperture motor code value corresponding to a currently required aperture number, and determine, based on the aperture motor code value, a current (or voltage) value of an aperture motor corresponding to the currently required aperture number. The AF module is used to determine a target focusing location by using an AF algorithm based on a depth of the target object and a location of a region in which the target object is located. The focus motor driving module is used to: determine a focus motor code value corresponding to the target focusing location, and determine, based on the focus motor code value, a current (or voltage) value of a focus motor corresponding to the target focusing location.

An aperture motor driver adjusts an aperture number based on a current (or voltage) value of the aperture motor delivered by the aperture motor driving module. A focus motor driver adjusts a focusing location based on a current (or voltage) value of the focus motor delivered by the focus motor driving module, so that the camera focuses on the target object.

The terminal device 100 captures an image by using the camera based on an adjusted aperture number and an adjusted focusing location. The image processing module is used to perform image processing on the image by using a preset image processing algorithm, to eliminate motion blur in the image, may further adjust saturation, a color temperature and/or contrast of the image, and may further perform portrait optimization or the like on a portrait in the image. Then, the terminal device 100 invokes the display driver to drive the display to display a captured image obtained after the image processing.

Implementations of this application may be randomly combined to achieve different technical effects.

All or some of the foregoing embodiments may be implemented by using software, hardware, firmware, or any combination thereof. When software is used for implementation, the implementation may be totally or partially implemented in a form of a computer program product. The computer program product includes one or more computer instructions. When computer program instructions are loaded and executed on a computer, all or some of the procedures or functions according to this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

A person of ordinary skill in the art may understand that all or a part of the procedures in the methods in embodiments are implemented. The procedures may be implemented by a computer program instructing related hardware. The program may be stored in a computer-readable storage medium. When the program is executed, the procedure of each method embodiment described above may be included. The foregoing storage medium includes any medium that can store program code, for example, a ROM, a random access memory RAM, a magnetic disk, or an optical disc.

In summary, the foregoing descriptions are merely embodiments of the technical solutions of the present invention, but are not intended to limit the protection scope of the present invention. Any modification, equivalent replacement, or improvement made according to disclosure of the present invention shall fall within the protection scope of the present invention.

## Claims

1. A photographing method, applied to a terminal device, wherein the terminal device comprises a camera, and an adjustable aperture is configured for the camera; and the method comprises:
starting, by the terminal device in response to a first instruction, the camera to capture an image based on a default aperture number;
detecting whether a first image captured by the camera comprises a salient object and a target person; and
determining a target focusing object and a target aperture number based on a depth of the salient object and a depth of the target person when detecting that the first image comprises the salient object and the target person; and
focusing on, by the camera, the target focusing object, and capturing an image based on the target aperture number.

2. The method according to claim 1, wherein the determining a target focusing object and a target aperture number based on a depth of the salient object and a depth of the target person when detecting that the first image comprises the salient object and the target person specifically comprises:
when detecting that the first image comprises the salient object and the target person, the salient object and the target person are different objects, and the depth of the salient object and the depth of the target person meet a first preset condition, determining the salient object as the target focusing object, and determining the target aperture number based on the depth of the salient object; or
when detecting that the first image comprises the salient object and the target person, the salient object and the target person are different objects, and the depth of the salient object and the depth of the target person do not meet a first preset condition, determining the target person as the target focusing object, and determining the target aperture number.

3. The method according to claim 2, wherein the first preset condition comprises: the depth of the salient object is less than the depth of the target person, and a depth difference between the depth of the salient object and the depth of the target person is greater than a difference threshold.

4. The method according to claim 2, wherein the terminal device stores a first correspondence between a depth and an aperture number, and the determining the target aperture number based on the depth of the salient object comprises:
determining, based on the first correspondence, an aperture number corresponding to the depth of the salient object as the target aperture number, wherein a smaller depth of the salient object indicates a smaller target aperture number.

5. The method according to claim 4, wherein the first correspondence comprises a correspondence between N aperture numbers of the adjustable aperture and M consecutive depth intervals, one or more depth intervals of the M consecutive depth intervals correspond to one of the N aperture numbers, and N and M are positive integers greater than 1.

6. The method according to claim 1, wherein before the capturing an image based on the target aperture number, the method further comprises:
determining target exposure time and a target light sensitivity based on the target aperture number, wherein a degree of change from a first value to a second value is less than a first preset range, the first value is determined based on a current aperture number, current exposure time, and a current light sensitivity, and the second value is determined based on the target aperture number, the target exposure time, and the target light sensitivity; and
the capturing an image based on the target aperture number comprises:
capturing the image based on the target aperture number, the target exposure time, and the target light sensitivity.

7. The method according to claim 1, wherein before the detecting whether a first image captured by the camera comprises a salient object and a target person, the method further comprises:
detecting whether current ambient light luminance is greater than a first luminance threshold; and
the detecting whether a first image captured by the camera comprises a salient object and a target person comprises:
when detecting that the ambient light luminance is greater than the first luminance threshold, detecting whether the first image captured by the camera comprises the salient object and the target person.

8. The method according to claim 1, wherein the determining a target focusing object and a target aperture number based on a depth of the salient object and a depth of the target person when detecting that the first image comprises the salient object and the target person specifically comprises:
when detecting that the first image comprises the salient object and the target person, and the salient object and the target person are a same object, determining the salient object as the target focusing object, and determining the target aperture number based on the depth of the salient object; or
when detecting that the first image comprises the salient object and the target person, and the salient object and the target person are a same person, determining the target person as the target focusing object, and determining the target aperture number.

9. The method according to claim 1, wherein the method further comprises:
when detecting that the first image comprises the salient object but does not comprise the target person, determining the salient object as the target focusing object, and determining the target aperture number based on the depth of the salient object; or
when detecting that the first image comprises the target person but does not comprise the salient object, determining the target person as the target focusing object, and determining the target aperture number.

10. The method according to claims 2, 8, and 9, wherein the determining the target aperture number specifically comprises:
determining the target aperture number as the default aperture number.

11. The method according to claims 2, 8, and 9, wherein the determining the target aperture number specifically comprises:
determining the target aperture number based on current ambient light luminance.

12. The method according to claims 2, 8, and 9, wherein the determining the target aperture number specifically comprises:
determining the target aperture number based on the depth of the target person.

13. The method according to claim 11, wherein when the ambient light luminance is greater than a second luminance threshold, the target aperture number is a first aperture number; or when the ambient light luminance is less than or equal to a third luminance threshold, the target aperture number is a second aperture number; and the default aperture number is less than the second aperture number and greater than the first aperture number.

14. The method according to claim 7, wherein after the detecting whether current ambient light luminance is greater than a first luminance threshold, the method further comprises:
determining the target aperture number as the default aperture number when detecting that the ambient light luminance is less than the first luminance threshold.

15. A terminal device, comprising a camera, a memory, one or more processors, a plurality of applications, and one or more programs, wherein an adjustable aperture is configured for the camera, the one or more programs are stored in the memory, and when the one or more processors execute the one or more programs, the terminal device is enabled to implement the method according to any one of claims 1 to 14.

16. A computer storage medium, comprising computer instructions, wherein when the computer instructions are run on a terminal device, the electronic device is enabled to perform the method according to any one of claims 1 to 14.

17. A computer program product, wherein when the computer program product runs on a computer, the computer is enabled to perform the method according to any one of claims 1 to 14.
